# EUROPEAN PATENT APPLICATION

(11) **EP 4 770 190 A1**
(43) Date of publication of application: **01.07.2026**
(21) Application number: 24864543.4
(22) Date of filing: 06.09.2024
(51) Int. Cl.: H04W 28/12

(54) **DATA PROCESSING METHOD AND APPARATUS**

(30) Priority: 13.09.2023 CN 202311187379
(71) Applicant: Huawei Technologies Co., Ltd., Shenzhen, Guangdong 518129 (CN)
(72) Inventor: FAN, Qiang, Shenzhen, Guangdong 518129 (CN)
(74) Representative: Körber, Martin Hans
(86) International application number: PCT/CN2024/117341
(87) International publication number: WO 2025/055823

(57) **Abstract**

This application provides a data processing method and an apparatus, applied to the field of communication technologies. The method includes: A transmitting end obtains first SN information of a data unit discarded by a first protocol layer of the transmitting end, and sends the first SN information to a second protocol layer of a receiving end by using control signaling of a second protocol layer of the transmitting end. Correspondingly, after obtaining the first SN information by using the control signaling from the second protocol layer of the transmitting end, the second protocol layer of the receiving end may deliver the first SN information to a first protocol layer of the receiving end. This method can effectively reduce an end-to-end transmission delay of service data.

## Description

This application claims priority to Chinese Patent Application No. 202311187379.7, filed with the China National Intellectual Property Administration on September 13, 2023 and entitled "DATA PROCESSING METHOD AND APPARATUS", which is incorporated herein by reference in its entirety.

### TECHNICAL FIELD

This application relates to the field of communication technologies, and in particular, to a data processing method and an apparatus.

### BACKGROUND

A new radio (new radio, NR) user plane protocol stack includes a service data adaptation protocol (service data adaptation protocol, SDAP) layer, a packet data convergence protocol (packet data convergence protocol, PDCP) layer, a radio link control (radio link control, RLC) layer, a medium access control (medium access control, MAC) layer, and a physical (physical, PHY) layer. The RLC layer is a protocol layer in the middle. The RLC layer provides a transmission service for a protocol data unit (protocol data unit, PDU) generated by an upper-layer protocol stack, and may perform operations such as segmentation, reassembly, and resegmentation on the PDU as required. To meet quality of service (quality of service, QoS) requirements in transmission of different types of data, the RLC layer provides three transmission modes: an acknowledged mode (acknowledged mode, AM) mode, an unacknowledged mode (unacknowledged mode, UM), and a transparent mode (transparent mode, TM). A data radio bearer (data radio bearer, DRB) used for service data transmission may be configured in the AM mode or the UM mode.

The PDCP layer is located above the RLC layer and provides functions such as forwarding, timer-based discarding, reordering, and in-order delivery of user plane/control plane packets. The timer-based discarding means as follows: When the PDCP layer receives a PDCP service data unit (service data unit, SDU) from an upper layer, a discard timer (discardTimer) is started for the SDU. When the discard timer associated with the SDU expires, the corresponding PDCP SDU and PDCP PDU are discarded. If the data packet has been delivered to the RLC layer, the PDCP layer further continues to indicate the RLC layer to perform packet discarding processing.

However, after a PDCP layer of a transmitting end discards a data unit, a PDCP layer of a receiving end still waits for the discarded data unit for reordering. Consequently, unnecessary reordering of the receiving end causes an extra waiting delay to data transmission, and increases an end-to-end transmission delay of service data.

### SUMMARY

Embodiments of this application provide a data processing method and an apparatus, to effectively reduce an end-to-end transmission delay of service data.

According to a first aspect, an embodiment of this application provides a data processing method. The method is applied to a transmitting end or a chip, a functional module, or the like disposed in the transmitting end, and the method includes:
obtaining first sequence number (sequence number, SN) information of a data unit discarded by a first protocol layer of the transmitting end; and sending the first SN information to a second protocol layer of a receiving end by using control signaling of a second protocol layer of the transmitting end.

In this embodiment of this application, the transmitting end sends the first SN information of the first protocol layer of the transmitting end by using the control signaling of the second protocol layer of the transmitting end, so that a processing priority of the control signaling can be fully used to reduce a queuing delay of the first SN information, and the second protocol layer of the receiving end can quickly receive the first SN information and deliver the first SN information to a first protocol layer. Therefore, the first protocol layer of the receiving end can quickly obtain the first SN information. Based on the first SN information, the first protocol layer of the receiving end can effectively learn of the data unit discarded by the first protocol layer of the transmitting end, thereby avoiding a large data transmission delay caused by continuous reordering performed by the first protocol layer of the receiving end due to the data unit discarded by the first protocol layer of the transmitting end or a large data transmission delay caused by continuous retransmission requirements of the first protocol layer of the receiving end due to the data unit discarded by the first protocol layer of the transmitting end, and effectively reducing an end-to-end transmission delay of service data.

In a possible implementation, the second protocol layer of the transmitting end is a radio link control RLC layer of the transmitting end, and the first protocol layer of the transmitting end is a packet data convergence protocol PDCP layer of the transmitting end.

In a possible implementation, the control signaling includes an RLC control protocol data unit PDU.

In a possible implementation, the sending the first SN information to the second protocol layer of the receiving end by using the control signaling of the second protocol layer of the transmitting end includes: sending the first SN information and second SN information to an RLC layer of the receiving end by using the RLC control PDU of the RLC layer of the transmitting end. The second SN information is SN information of the RLC layer of the transmitting end.

According to the method provided in this embodiment of this application, a delay in sending SN information (that is, the first SN information) of the PDCP layer of the transmitting end to a PDCP layer of the receiving end and a delay in sending SN information (that is, the second SN information) of the RLC layer of the transmitting end to the RLC layer of the receiving end are effectively shortened. The PDCP layer/the RLC layer of the receiving end can update, in time based on the SN information of the transmitting PDCP layer/the receiving RLC layer, a variable maintained by the PDCP layer/the RLC layer of the receiving end. This effectively avoids an extra reordering delay caused because the transmitting PDCP layer discards the data unit and the receiving PDCP layer still performs a reordering process and waits for the discarded data unit, and effectively avoids a case in which the receiving RLC layer still requires retransmission from the transmitting RLC layer though the data unit is discarded. Therefore, according to the method provided in this embodiment of this application, an end-to-end transmission delay of service data is effectively reduced, user service experience is improved, and resources for data unit retransmission are saved.

In a possible implementation, the method further includes: receiving a first RLC status report. The obtaining the first sequence number (sequence number, SN) information of the data unit discarded by the first protocol layer of the transmitting end includes: determining the first SN information based on an SN of a successfully received data unit indicated by the first RLC status report and the data unit discarded by the first protocol layer of the transmitting end.

In this embodiment of this application, the first SN information may be an SN of an unsuccessfully received data unit in data units discarded by the first protocol layer of the transmitting end.

In a possible implementation, after the sending the first SN information to the second protocol layer of the receiving end by using the control signaling of the second protocol layer of the transmitting end, the method further includes: receiving a second RLC status report; and when an unsuccessfully received data unit indicated by the second RLC status report includes a data unit indicated by the first SN information, retransmitting the first SN information to the second protocol layer of the receiving end by using the control signaling of the second protocol layer of the transmitting end.

In this embodiment of this application, when the transmitting end receives the second RLC status report and the unsuccessfully received data unit indicated by the second RLC status report includes a data unit indicated by the first SN information, the transmitting end may learn, based on the second RLC status report, that the receiving end may have not received the first SN information, so that the transmitting end can retransmit the first SN information in time, thereby avoiding a large data transmission delay caused by continuous reordering performed by the first protocol layer of the receiving end due to the data unit discarded by the first protocol layer of the transmitting end or a large data transmission delay caused by continuous retransmission requirements of the first protocol layer of the receiving end due to the data unit discarded by the first protocol layer of the transmitting end, and effectively reducing an end-to-end transmission delay of service data.

In a possible implementation, after the sending the first SN information to the second protocol layer of the receiving end by using the control signaling of the second protocol layer of the transmitting end, the method further includes: receiving a third RLC status report. The third RLC status report indicates that one or more data units in a data unit indicated by the first SN information are successfully received.

In this embodiment of this application, when the transmitting end receives the third RLC status report and the third RLC status report indicates that one or more data units in a data unit indicated by the first SN information are successfully received, the transmitting end may learn, based on the third RLC status report, that the receiving end has received the first SN information, and the transmitting end may clear, in time based on the third RLC status report, the first SN information buffered by the transmitting end or the data units indicated by the first SN information.

In a possible implementation, the second protocol layer of the transmitting end is a medium access control MAC layer of the transmitting end, and the first protocol layer of the transmitting end is an RLC layer of the transmitting end.

In a possible implementation, the control signaling includes a MAC control element (control element, CE).

According to a second aspect, an embodiment of this application provides a data processing method. The method is applied to a receiving end or a chip, a functional module, or the like disposed in the receiving end, and the method includes:

A second protocol layer of the receiving end obtains, by using control signaling from a second protocol layer of a transmitting end, first SN information of a data unit discarded by a first protocol layer of the transmitting end. The second protocol layer of the receiving end sends the first SN information to a first protocol layer of the receiving end.

In a possible implementation, the second protocol layer of the receiving end is a radio link control RLC layer of the receiving end, and the first protocol layer of the receiving end is a packet data convergence protocol PDCP layer of the receiving end.

In a possible implementation, the control signaling includes an RLC control protocol data unit PDU.

In a possible implementation, that the second protocol layer of the receiving end obtains, by using the control signaling from the second protocol layer of the transmitting end, the first SN information of the data unit discarded by the first protocol layer of the transmitting end includes: The second protocol layer of the receiving end obtains the first SN information and second SN information by using the control signaling from the second protocol layer of the transmitting end. The second SN information is SN information of an RLC layer of the transmitting end, and the first SN information is SN information of a PDCP layer of the transmitting end.

In a possible implementation, the method further includes: updating, based on the first SN information, a variable maintained by the PDCP layer of the receiving end; and updating, based on the second SN information, a variable maintained by the RLC layer of the receiving end.

In this embodiment of this application, after quickly receiving the first SN information of the first protocol layer, the first protocol layer of the receiving end can effectively update, by using the first SN information, the variable and a window maintained by the first protocol layer of the receiving end, thereby reducing a delay in processing a subsequent data unit by the first protocol layer of the receiving end. After quickly receiving the second SN information of the second protocol layer, the second protocol layer of the receiving end can effectively update, by using the second SN information, the variable and a window maintained by the second protocol layer of the receiving end, thereby avoiding a case in which the second protocol layer of the receiving end continuously requests retransmission of the discarded data unit, and saving air interface resources for retransmission.

In a possible implementation, the method further includes: sending a third RLC status report. The third RLC status report indicates that one or more data units in a data unit indicated by the first SN information are successfully received.

In a possible implementation, the method further includes: sending a second RLC status report, where an unsuccessfully received data unit indicated by the second RLC status report includes a data unit indicated by the first SN information; and obtaining, by the second protocol layer of the receiving end, the retransmitted first SN information by using the control signaling from the second protocol layer of the transmitting end.

In a possible implementation, the second protocol layer of the receiving end is a medium access control MAC layer of the receiving end, and the first protocol layer of the receiving end is an RLC layer of the receiving end.

In a possible implementation, the control signaling includes a MAC control element CE.

According to a third aspect, an embodiment of this application provides a data processing method. The method is applied to a terminal device or a chip, a functional module, or the like disposed in the terminal device, and the method includes:
receiving indication information, where the indication information indicates that a transport block (transport block, TB) of a process is unsuccessfully decoded, and the TB carries one or more SDUs; and triggering automatic repeat request (automatic repeat request, ARQ) retransmission of the one or more SDUs based on that the TB is unsuccessfully decoded.

In this embodiment of this application, a condition for triggering ARQ retransmission may be that the terminal device receives NACK feedback (that is, the indication information) indicating that a TB fails to be decoded. Therefore, ARQ retransmission can be quickly triggered by using the indication information.

According to a fourth aspect, an embodiment of this application provides a data processing method. The method is applied to a network device or a chip, a functional module, or the like disposed in the network device, and the method includes:
sending indication information when a TB of a process is unsuccessfully decoded, where the indication information indicates that the TB of the process is unsuccessfully decoded, and the TB carries one or more SDUs.

With reference to the third aspect or the fourth aspect, in a possible implementation, the indication information is carried in L1 signaling or L2 signaling.

With reference to the third aspect or the fourth aspect, in a possible implementation, when the indication information is carried in the L1 signaling, the terminal device delivers the L1 signaling to a MAC layer.

With reference to the third aspect or the fourth aspect, in a possible implementation, the indication information is carried in scheduling DCI of a newly transmitted TB of the process; or the indication information is carried in scheduling DCI of another process in a same cell as the process; or the indication information is carried in scheduling DCI of a process in another cell.

With reference to the third aspect or the fourth aspect, the L2 signaling is a MAC CE, and the MAC CE carries a cell identifier and an identifier of the process; or the MAC CE carries a cell identifier and a bitmap, and each bit in the bitmap may correspond to indication information indicating whether a previous transmission of a process in a cell indicated by the cell identifier ends with successful decoding.

According to a fifth aspect, an embodiment of this application provides a data processing method. The method is applied to a communication apparatus. The communication apparatus may include a terminal device or a chip, a functional module, or the like disposed in the terminal device, or the communication apparatus may include a network device or a chip, a functional module, or the like disposed in the network device. The method includes:
sending a hybrid automatic repeat request (hybrid automatic repeat request, HARQ) negative acknowledgment (negative acknowledgment, NACK) when the communication apparatus unsuccessfully decodes a TB, where the HARQ NACK indicates to retransmit the TB, and the TB carries one or more SDUs; and triggering ARQ retransmission of the one or more SDUs when the number of HARQ NACKs of the TB reaches a maximum number.

According to a sixth aspect, an embodiment of this application provides a communication apparatus, configured to perform the method in any one of the first aspect or the possible implementations. The communication apparatus includes a module configured to perform the method in any one of the first aspect or the possible implementations.

According to a seventh aspect, an embodiment of this application provides a communication apparatus, configured to perform the method in any one of the second aspect or the possible implementations. The communication apparatus includes a module configured to perform the method in any one of the second aspect or the possible implementations.

According to an eighth aspect, an embodiment of this application provides a communication apparatus, configured to perform the method in any one of the third aspect, the fifth aspect, or the possible implementations. The communication apparatus includes a module configured to perform the method in any one of the third aspect, the fifth aspect, or the possible implementations.

According to a ninth aspect, an embodiment of this application provides a communication apparatus, configured to perform the method in any one of the fourth aspect or the possible implementations. The communication apparatus includes a module configured to perform the method in any one of the fourth aspect or the possible implementations.

According to a tenth aspect, an embodiment of this application provides a communication apparatus. The communication apparatus includes a processor, configured to perform the method according to any one of the first aspect to the fifth aspect or the possible implementations. The processor is configured to execute a program stored in a memory. When the program is executed, the method according to any one of the first aspect to the fifth aspect or the possible implementations is performed.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together. For example, the communication apparatus may be a chip.

In a possible implementation, the communication apparatus further includes a transceiver. The transceiver is configured to receive information or send information.

According to an eleventh aspect, an embodiment of this application provides a communication apparatus. The communication apparatus includes a logic circuit and an interface. The logic circuit is coupled to the interface. The interface is configured to input and/or output information. The logic circuit is configured to perform the method according to any one of the first aspect to the fifth aspect or the possible implementations.

In a possible implementation, that the interface is configured to output the information includes: The interface is configured to output SN information. For example, the logic circuit is configured to obtain the SN information of a data unit discarded by a first protocol layer of a transmitting end.

In a possible implementation, that the interface is configured to input the information includes: The interface is configured to input SN information. For example, the logic circuit is configured to deliver the SN information from a second protocol layer to a first protocol layer.

According to a twelfth aspect, an embodiment of this application provides a computer-readable storage medium. The computer-readable storage medium is configured to store a computer program. When the computer program is run on a computer, the method according to any one of the first aspect, the second aspect, the third aspect, the fourth aspect, the fifth aspect, or the possible implementations is performed.

According to a thirteenth aspect, an embodiment of this application provides a computer program product. The computer program product includes a computer program or computer code. When the computer program or the computer code is run on a computer, the method according to any one of the first aspect, the second aspect, the third aspect, the fourth aspect, the fifth aspect, or the possible implementations is performed.

According to a fourteenth aspect, an embodiment of this application provides a computer program. When the computer program is run on a computer, the method according to any one of the first aspect, the second aspect, the third aspect, the fourth aspect, the fifth aspect, or the possible implementations is performed.

According to a fifteenth aspect, an embodiment of this application provides a communication system. The communication system includes a transmitting end and a receiving end. The transmitting end is configured to perform the method according to any one of the first aspect or the possible implementations of the first aspect, and the receiving end is configured to perform the method according to any one of the second aspect or the possible implementations of the second aspect.

According to a sixteenth aspect, an embodiment of this application provides a communication system. The communication system includes a terminal device and a network device. The terminal device is configured to perform the method according to any one of the third aspect or the possible implementations of the third aspect, and the network device is configured to perform the method according to any one of the fourth aspect or the possible implementations of the fourth aspect. Alternatively, the terminal device is configured to perform the method according to the fifth aspect.

### BRIEF DESCRIPTION OF DRAWINGS

FIG. 1a is a diagram of an architecture of a communication system according to an embodiment of this application;
FIG. 1b is a diagram of an architecture of another communication system according to an embodiment of this application;
FIG. 2a is a diagram of a format of a user plane protocol stack according to an embodiment of this application;
FIG. 2b is a diagram of a format of another user plane protocol stack according to an embodiment of this application;
FIG. 3a is a diagram of a scenario of a solution A according to an embodiment of this application;
FIG. 3b is a diagram of a scenario of this solution according to an embodiment of this application;
FIG. 4 is a schematic flowchart of a data processing method according to an embodiment of this application;
FIG. 5a is a diagram of interaction about SN information according to an embodiment of this application;
FIG. 5b is another diagram of interaction about SN information according to an embodiment of this application;
FIG. 5c is a diagram of a format of an RLC control PDU according to an embodiment of this application;
FIG. 6a is still another diagram of interaction about SN information according to an embodiment of this application;
FIG. 6b is still another diagram of interaction about SN information according to an embodiment of this application;
FIG. 6c is still another diagram of interaction about SN information according to an embodiment of this application;
FIG. 6d is a diagram of a format of a MAC CE according to an embodiment of this application;
FIG. 7a is a diagram of a scenario of a data processing method according to an embodiment of this application;
FIG. 7b is a diagram of SN information according to an embodiment of this application;
FIG. 7c is a diagram of updating a receiving window by a receiving PDCP layer according to an embodiment of this application;
FIG. 8 is a diagram of a scenario of a data processing method in a CU-DU split architecture according to an embodiment of this application;
FIG. 9a is a schematic flowchart of a data processing method according to an embodiment of this application;
FIG. 9b is a schematic flowchart of another data processing method according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of still another communication apparatus according to an embodiment of this application.

### DESCRIPTION OF EMBODIMENTS

For ease of understanding technical solutions of this application, the following further describes this application with reference to accompanying drawings.

Terms "first", "second", and the like in the specification, claims, and accompanying drawings of this application are merely used to distinguish between different objects, and are not used to describe a specific sequence. In addition, terms "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

Reference to "embodiment" in the specification means that specific features, structures, or characteristics described with reference to an embodiment may be included in at least one embodiment of this application. The phrase throughout the specification may not necessarily refer to a same embodiment, nor an independent or optional embodiment exclusive from another embodiment. It may be understood explicitly and implicitly by a person skilled in the art that embodiments described in the specification may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate the following three cases: only A exists, only B exists, and both A and B exist. A and B may be singular or plural. The "or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. The expression "at least one of the following items (pieces)" or a similar expression thereof means any combination of these items. For example, at least one item (piece) of a, b, or c may represent a, b, c, "a and b", "a and c", "b and c", or "a, b, and c".

Embodiments of this application provide a data processing method and an apparatus, to effectively avoid a resource waste, save resources, and reduce a transmission delay of service data.

The following describes a communication system in embodiments of this application.

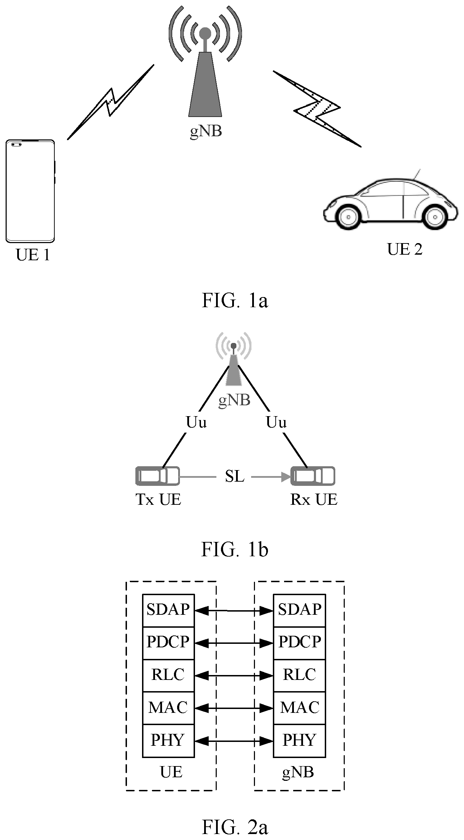

The technical solutions provided in embodiments of this application may be applied to various communication systems, for example, an internet of things (Internet of Things, IoT) system, a narrow band internet of things (narrow band Internet of Things, NB-IoT) system, a long term evolution (long term evolution, LTE) system, a 5th-generation (5th-generation, 5G) communication system, a 6th-generation (6th-generation, 6G) communication system, and a new communication system that emerges in future communication development. The IoT may include, for example, an internet of vehicles. Communication manners in the internet of vehicles system may be collectively referred to as vehicle-to-everything (vehicle-to-everything, V2X, where X may represent anything). For example, the V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like. In FIG. 1b below, one terminal device (for example, Tx UE) and another terminal device (for example, Rx UE) may communicate with each other by using device-to-device (device-to-device, D2D), machine-to-machine (machine-to-machine, M2M), V2X, or other technologies.

The technical solutions provided in embodiments of this application may be further applied to non-terrestrial network (non-terrestrial network, NTN) communication (which may also be referred to as non-ground network communication).

FIG. 1a is a diagram of an architecture of a communication system according to an embodiment of this application. As shown in FIG. 1a, the communication system may include at least one network device and at least one terminal device, for example, UE 1 and UE 2 in FIG. 1a. As shown in FIG. 1a, the terminal device and the network device may communicate with each other through a Uu interface. A type of the terminal device shown in FIG. 1a is merely an example. This is not limited in embodiments of this application. The UE 2 shown in FIG. 1a is merely an example. For example, in specific implementation, the terminal device may further include an in-vehicle device, an in-vehicle terminal, or the like in an internet of vehicles. A specific form of the terminal device used in the internet of vehicles is not limited in embodiments of this application.

FIG. 1b is a diagram of a structure of another communication system according to an embodiment of this application. As shown in FIG. 1b, the communication system may include at least one network device and at least one terminal device, for example, transmitting UE (Tx UE) and receiving UE (Rx UE) in FIG. 1b. As shown in FIG. 1b, terminal devices may communicate with each other over a sidelink (sidelink, SL) link.

FIG. 1a and FIG. 1b show examples of one network device and a plurality of terminal devices, and communication links between communication devices. In specific implementation, the communication system may alternatively include more network devices, and a coverage area of each network device may include more or fewer terminal devices. This is not limited in embodiments of this application. Next generation NodeBs (next generation NodeB, gNB) shown in FIG. 1a and FIG. 1b are merely examples, and should not be construed as a limitation on embodiments of this application.

The following describes in detail the terminal device and the network device.

The terminal device is an apparatus having a wireless transceiver function. The terminal device may communicate with an access network device (or referred to as an access device or the following network device) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, including an indoor, outdoor, handheld, or in-vehicle terminal device; or may be deployed on water, including a ship or the like. In another possible implementation, the terminal device may be a handheld device, an in-vehicle device, a wearable device, a sensor, a terminal in an internet of things, a terminal in an internet of vehicles, an uncrewed aerial vehicle, a terminal device in any form in a 5G network or a future network, or the like having a wireless communication function. This is not limited in embodiments of this application.

The network device may be an apparatus that is deployed in a radio access network and that provides a wireless communication service for a terminal device. The network device may also be referred to as an access network device, an access device, a RAN device, or the like. For example, the network device may be a next generation NodeB (next generation NodeB, gNB), a next generation evolved NodeB (next generation evolved NodeB, ng-eNB), a network device in 6G communication, or the like. The network device may be any device having a wireless transceiver function, and includes but is not limited to the foregoing base stations (including a base station deployed on a satellite). Alternatively, the network device may be an apparatus that has a base station function in 6G. In an example, the network device may be an access node, a wireless relay node, a wireless backhaul node, or the like in a wireless local area network (wireless-fidelity, Wi-Fi) system. In another example, the network device may be a radio controller in a cloud radio access network (cloud radio access network, CRAN) scenario. In still another example, the network device may be a wearable device, an in-vehicle device, or the like that can provide a wireless communication service. In still another example, the network device may alternatively be a small cell, a transmission reception point (transmission reception point, TRP) (or referred to as a transmission point), or the like. In systems using different radio access technologies, names of communication apparatuses having network device functions may be different, which are not enumerated in embodiments of this application.

In some deployments of the network device, the network device may include a central unit (central unit, CU), a distributed unit (distributed unit, DU), and the like. The network device including the CU and the DU may be understood as follows: A protocol stack is split, functions of some protocol layers are centrally controlled by the CU, functions of some or all remaining protocol layers are distributed in the DU, and the CU centrally controls the DU. In some other deployments of the network device, the CU may be further split into a CU-control plane (control plane, CP), a CU-user plane (user plane, UP), and the like. In still some other deployments of the network device, the network device may alternatively be in an open radio access network (open radio access network, ORAN) architecture. When the network device is in the ORAN architecture, the network device may be an access network device in the ORAN, a functional module in the ORAN, or the like. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the like. The deployment manners of the network device enumerated herein are merely examples. With evolution of standard technologies, the network device may have other deployment manners. This is not limited in embodiments of this application.

In embodiments of this application, the method provided in embodiments of this application is described by using a transmitting end and a receiving end. The transmitting end is a communication apparatus that sends a data unit from an air interface, and the receiving end is a communication apparatus that receives the data unit from the air interface. In an example, the transmitting end may be a terminal device, and the receiving end may be a network device. In another example, the transmitting end may be a network device, and the receiving end may be a terminal device. In still another example, the transmitting end and the receiving end may be different terminal devices. Specific forms of the transmitting end and the receiving end are not enumerated herein.

For ease of description, when specific examples are used below, an example in which a terminal device is UE and a network device is a gNB is used to describe the method provided in embodiments of this application.

The following describes protocol stacks in embodiments of this application.

FIG. 2a is a diagram of a format of a user plane protocol stack according to an embodiment of this application. As shown in FIG. 2a, user plane protocol stacks of the UE and the gNB may include at least one of the following: an SDAP layer, a PDCP layer, an RLC layer, a MAC layer, and a PHY layer. The protocol stack of the gNB shown in FIG. 2a is merely an example.

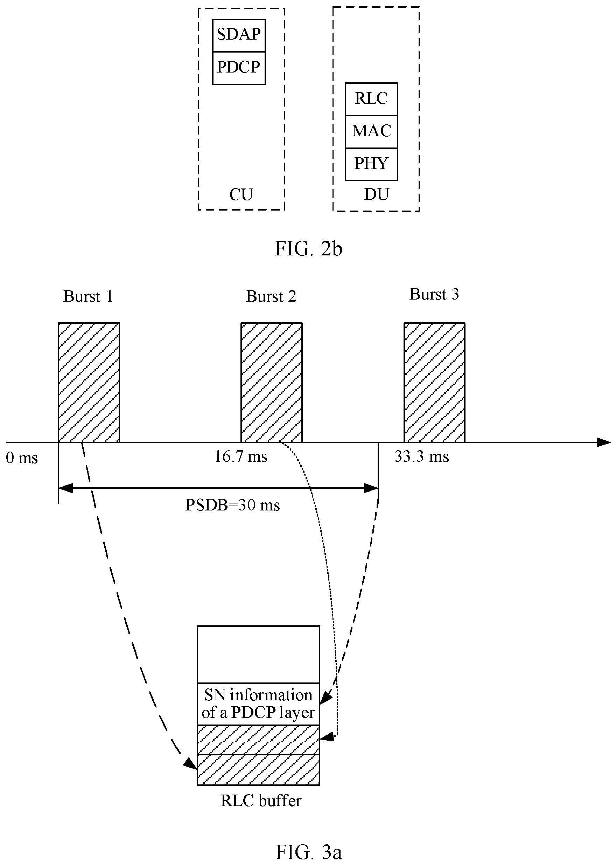

FIG. 2b is a diagram of a format of another user plane protocol stack according to an embodiment of this application. As shown in FIG. 2b, the SDAP layer and the PDCP layer are deployed on a CU, and the RLC layer, the MAC layer, and the PHY layer are deployed on a DU. The CU and the DU may be connected through an F1 interface. The CU in the gNB is connected to a core network through an NG interface, and the CU in the gNB is connected to another gNB through an Xn interface. For example, when the CU is split into a CU-CP and a CU-UP, a user plane interface between the CU-UP and the DU may be F1-U, and a control plane interface between the CU-CP and the DU may be F1-C.

The RLC layer provides the following three transmission modes:
A TM mode is used to transmit data on a signaling radio bearer 0 (signaling radio bearer 0, SRB 0), paging data, and a broadcast system message. Such types of messages cannot be segmented, and data is transparently transmitted through the RLC protocol layer.

A UM mode is applicable to a real-time service having a high latency requirement and error tolerance. Once a data packet is transmitted by a UM RLC entity, it is considered that the transmission ends. Even if the data packet is lost during air interface transmission, the RLC layer does not retransmit the data packet. For a low-latency high-reliability communication (ultra-reliable low-latency communication, URLLC) application that has high requirements on both latency and reliability, usually, the UM RLC mode may be used in conjunction with another reliability improvement mechanism, such as a PDCP duplication (duplication) mechanism or a slot aggregation (slot aggregation) mechanism.

An AM mode is applicable to a non-real-time service having a high reliability requirement, such as web (Web) browsing, file transfer protocol (file transfer protocol, FTP) file downloading, or signaling transmission. For the service, a data transmission loss needs to be avoided as much as possible. Therefore, an ARQ mechanism in the AM mode may be used to ensure lossless transmission of data. A basic idea of ARQ is as follows: An RLC entity on a receiving side (that is, an RLC entity at a receiving end) may feed back an RLC status report to an RLC entity on a transmitting side (that is, an RLC entity at a transmitting end). The RLC status report may indicate data packets that are successfully received and data packets that fail to be received. The RLC entity on the transmitting side may retransmit, based on the RLC status report, the data packets that fail to be transmitted.

The user plane protocol stacks shown in FIG. 2a and FIG. 2b are merely examples. With evolution of standards, the user plane protocol stacks may change, and any user plane protocol stack by which a communication apparatus can perform the method provided in embodiments of this application falls within the protection scope of embodiments of this application. For example, for the network device of the ORAN, the O-CU may include the PDCP layer, and the O-DU may include the RLC layer. Other protocol layers included in the O-CU and the O-DU are not enumerated herein. Functions implemented by each protocol layer shown in FIG. 2a and FIG. 2b may be implemented by an entity of the corresponding protocol layer. The following protocol layer and entity (an entity corresponding to the protocol layer) may be understood as in correspondence or interchangeable.

For example, in FIG. 2a, when the UE sends a data unit (that is, the UE serves as a transmitting end), each protocol layer in the UE may process an SDU obtained from an upper protocol layer, and then deliver a PDU obtained through the processing to a lower protocol layer. When the gNB receives the data unit (that is, the gNB serves as a receiving end), each protocol layer in the gNB may process an obtained PDU, and then deliver an SDU obtained through the processing to an upper protocol layer. For the transmitting end, functions implemented by each protocol layer are processing an obtained SDU and delivering a PDU to a lower layer. For the receiving end, functions implemented by each protocol layer are processing an obtained PDU and delivering an SDU to an upper layer. Therefore, for brevity, the SDU and the PDU are not distinguished below, and are uniformly represented by using a data unit. For example, the data unit may include any one of the following: a PDCP SDU, an RLC SDU, a PDCP PDU, or an RLC PDU. Alternatively, the data unit may be replaced with a data packet or the like. A specific name of the data unit is not limited in embodiments of this application.

The following describes terms in embodiments of this application.

### 1. Extended reality (extended reality, XR)

The XR refers to various real-virtual combined environments generated by computing technologies and wearable devices, and human-machine interaction. The XR may include the following forms: augmented reality (augmented reality, AR), mixed reality (mixed reality, MR), and virtual reality (virtual reality, VR). The XR is one of 5G multimedia applications mainly considered in the industry field at present. Generally, an XR service periodically generates data frames at a specific frame rate. Generally, the data frame is an information unit at an application layer. During transmission at a low layer, the data frame may be divided into a plurality of data packets (or referred to as data units) due to a limitation of a size of a maximum transmission unit at the low layer.

For example, service models of downlink XR services may be shown as follows:

AR/VR: A frame rate may be 60 frames per second (frame per second, fps), indicating that 60 frames of video images are generated per second (which is merely an example), and one video frame appears approximately every 16.66 ms. A transmission rate is 20 Mbit/s, 45 Mbit/s, or the like. Alternatively, the frame rate may be 120 fps, indicating that 120 frames of video images are generated per second, and one video frame appears approximately every 8.33 ms. For example, an air interface transmission delay budget of a complete video frame is 10 ms. A base station starts timing when receiving data of a frame of image from a user plane function (user plane function, UPF), until the frame of image is successfully sent from the base station to UE. Such duration may be referred to as an air interface transmission delay budget of a video frame. For video frames, transmission reliability needs to reach 99%.

Cloud gaming (cloud gaming, CG): 60 frames of video images are generated per second, or 120 frames of video images are generated per second. A transmission rate is 8 Mbit/s, 30 Mbit/s, or the like. An air interface transmission delay budget of a complete video frame is 15 ms. For video frames, transmission reliability needs to be 99%.

In addition, the XR service has requirements for a large service data volume (a large transmission rate), high transmission reliability, and a low transmission latency. The video images enumerated above are merely examples. The XR service may be further applied to other types of images. This is not limited in embodiments of this application.

### 2. Data unit set

The data unit set may also be referred to as a PDU set (PDU set). The PDU set is one or more PDUs that carry payload of an information unit or a data unit (for example, a video frame or a video slice) generated by an application layer. For example, a video frame generated by an XR application is large, and may be divided into 100 PDUs at an IP layer. The 100 PDUs are referred to as a PDU set.

Different from conventional QoS parameters of a packet delay budget (packet delay budget, PDB) and a packet error rate (packet error rate, PER), the XR service introduces concepts of a packet set delay budget (packet set delay budget, PSDB) and a packet set error rate (packet set error rate, PSER), which respectively indicate a delay budget and a packet error rate of the PDU set. For example, in downlink transmission, the PSDB indicates a delay budget from time when the first PDU of a PDU set arrives at a user plane function (user plane function, UPF) network element to time when the last PDU is successfully transmitted to UE, and the PSER indicates a PDU set transmission success rate measured in PDU sets.

### 3. First protocol layer of a transmitting end and first protocol layer of a receiving end

In an example, the first protocol layer of the transmitting end may be a PDCP layer of the transmitting end, and the first protocol layer of the receiving end is a PDCP layer of the receiving end.

In another example, the first protocol layer of the transmitting end may be an RLC layer of the transmitting end, and the first protocol layer of the receiving end is an RLC layer of the receiving end.

### 4. Second protocol layer of the transmitting end and second protocol layer of the receiving end

In an example, the second protocol layer of the transmitting end may be the RLC layer of the transmitting end, and the second protocol layer of the receiving end is the RLC layer of the receiving end.

In another example, the second protocol layer of the transmitting end may be a MAC layer of the transmitting end, and the second protocol layer of the receiving end is a MAC layer of the receiving end.

A first protocol layer and a second protocol layer shown in embodiments of this application may be a combination of the foregoing term 3 and term 4. For example, the first protocol layer may be the PDCP layer, and the second protocol layer may be the RLC layer. For another example, the first protocol layer may be the RLC layer, and the second protocol layer may be the MAC layer. For another example, the first protocol layer may be the PDCP layer, and the second protocol layer may be the MAC layer. Based on the examples of the first protocol layer and the second protocol layer, first SN information shown in embodiments of this application may be SN information of the PDCP layer, and second SN information may be SN information of the RLC layer. Alternatively, the first SN information may be SN information of the RLC layer. Alternatively, the first SN information may be SN information of the PDCP layer. For ease of description, the following uses the SN information of the PDCP layer and the SN information of the RLC layer as an example for description.

For ease of description, the PDCP layer of the transmitting end is referred to as a transmitting PDCP layer for short below. Similarly, the PDCP layer of the receiving end is referred to as a receiving PDCP layer for short. The RLC layer of the transmitting end is referred to as a transmitting RLC layer for short, and the RLC layer of the receiving end is referred to as a receiving RLC layer for short. The MAC layer of the transmitting end is referred to as a transmitting MAC layer for short, and the MAC layer of the receiving end is referred to as a receiving MAC layer for short.

### 5. RLC status report

The receiving RLC layer may feed back an RLC status report to the transmitting RLC layer. The RLC status report may indicate a data unit that is successfully received and/or a data unit that fails to be received. The transmitting RLC layer may retransmit, based on the RLC status report, the data unit that fails to be received. For example, after determining, based on the RLC status report, that a data unit corresponding to an RLC SN is successfully transmitted, the transmitting RLC layer may send, to the transmitting PDCP layer, an indication (for example, referred to as a first indication below) indicating that the RLC SDU is successfully delivered. The RLC SN shown herein represents an SN of the RLC SDU.

The first indication shown in embodiments of this application may be used by the transmitting RLC layer to indicate, to the transmitting PDCP layer, a data unit successfully received by the receiving end. For example, the first indication represents indication information determined by the transmitting RLC layer based on an RLC status report (for example, the following first RLC status report). The transmitting RLC layer may send the first indication to the transmitting PDCP layer. After receiving the first indication, the transmitting PDCP layer may learn of, based on the first indication, data units successfully received by the receiving end.

Currently, there is a solution A: An RLC layer of a transmitting end notifies, by using RLC layer indication information, a receiving RLC layer to update a receiving window, and a PDCP layer of the transmitting end notifies, by using PDCP layer indication information, a receiving PDCP layer to update a receiving window. In this solution, when the PDCP layer indication information arrives at the transmitting RLC layer, the PDCP layer indication information is considered as an RLC SDU and needs to queue to be sent. Therefore, the PDCP layer indication information cannot be quickly delivered to the receiving PDCP layer to quickly push the window maintained by the receiving PDCP layer. In addition, the PDCP layer and the RLC layer separately send the PDCP layer indication information and the RLC layer indication information, resulting in high signaling overheads. Generally, when the PDCP layer indication information and the RLC layer indication information are separately sent, header information of the two pieces of information needs to be separately sent, resulting in high information header overheads.

FIG. 3a is a diagram of a scenario of the solution A according to an embodiment of this application. As shown in FIG. 3a, when a transmission wait time of a first PDU set (a burst 1 shown in FIG. 3a) exceeds a packet set delay budget (packet set delay budget, PSDB) (that is, a timer associated with the PDU set expires), a transmitting end may discard the first PDU set, generate SN information (carried in a PDCP control PDU) of a PDCP layer, and deliver the SN information to an RLC layer for transmission. However, in this case, a second PDU set (for example, a burst 2 shown in FIG. 3a) also waits in an RLC buffer (RLC buffer) for transmission, and the SN information of the PDCP layer cannot jump before the second PDU set to be quickly transmitted. When the second PDU set is transferred to a receiving end, because the receiving end has not received the first PDU set, the second PDU set needs to be reordered at the receiving end, which is delivered to an upper layer in sequence after the first PDU set is received. When the SN information of the PDCP layer is sent to the receiving end, the second PDU set has experienced a meaningless reordering delay. The reordering delay increases an end-to-end transmission delay of a data packet, and affects user service experience. The burst (burst) shown in FIG. 3a may include one or more PDU sets.

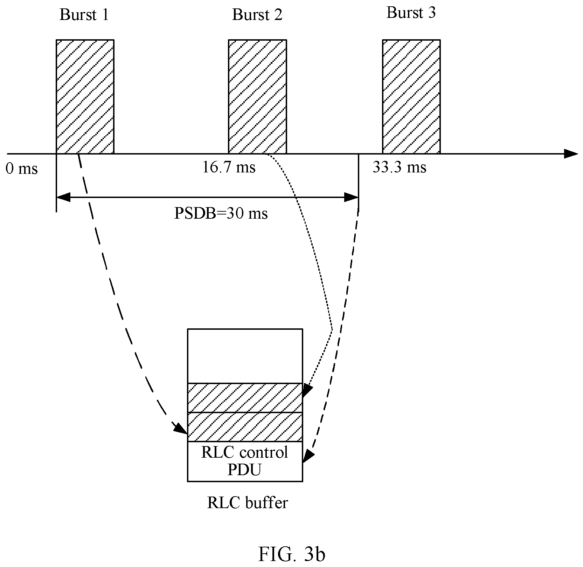

In view of this, embodiments of this application provide a data processing method. FIG. 3b is a diagram of a scenario of this solution according to an embodiment of this application. As shown in FIG. 3b, when a first PDU set expires, a transmitting end discards the first PDU set. The transmitting end may generate SN information of a PDCP layer, and the SN information of the PDCP layer is carried by using an RLC control PDU. According to the method provided in embodiments of this application, the transmitting end processes the RLC control PDU before processing a second PDU set, and quickly transmits the RLC control PDU to a receiving end. Therefore, the receiving end can receive the RLC control PDU before receiving the second PDU set, and update, based on the RLC control PDU, a window and a variable maintained by the receiving end. This effectively avoids a reordering delay of the second PDU set, and reduces an end-to-end transmission delay of a data packet. For example, the transmitting end may send the SN information of the PDCP layer and SN information of an RLC layer by using the RLC control PDU, so that a transmitting RLC layer can preferentially and quickly process the RLC control PDU, thereby accelerating transmission of the SN information, and quickly pushing windows and variables maintained by a receiving PDCP layer and RLC layer.

The scenario shown in FIG. 3b is merely an example. The data processing method provided in embodiments of this application may be further applicable to more scenarios. Examples of other scenarios are not enumerated herein.

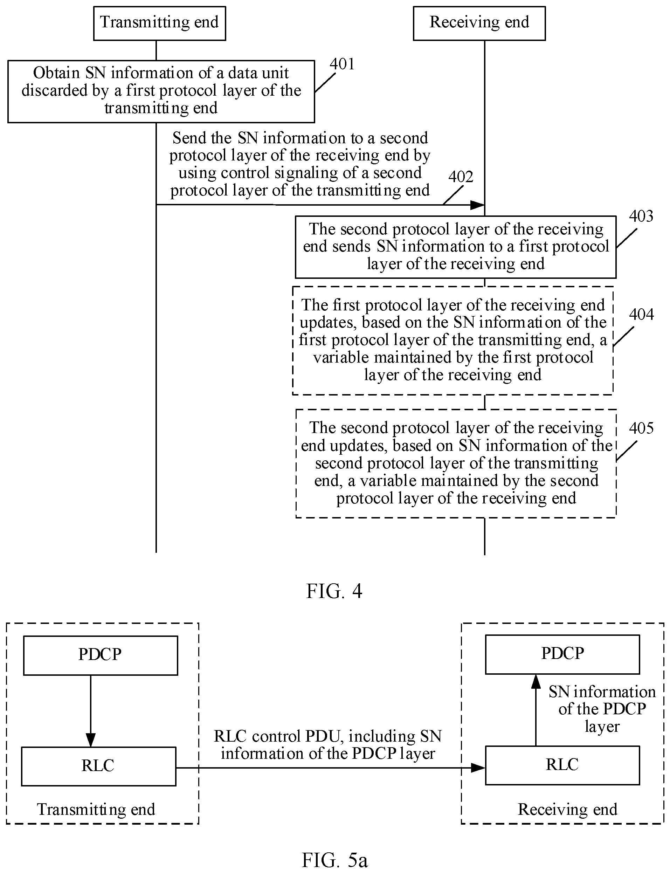

FIG. 4 is a schematic flowchart of a data processing method according to an embodiment of this application. For descriptions of a transmitting end and a receiving end in the method, refer to FIG. 1a and FIG. 1b. Details are not described herein again. For descriptions of a protocol stack in the method, refer to FIG. 2a and FIG. 2b. Details are not described herein again. As shown in FIG. 4, the method includes the following steps.

401. A transmitting end obtains SN information of a data unit discarded by a first protocol layer of the transmitting end.

The discarded data unit is one or more discarded data units. For example, the plurality of data units may belong to a same data unit set. For related descriptions of the data unit set, refer to the foregoing term 2. Details are not described herein again.

In this embodiment of this application, the SN information may have the following several examples:

Example 1A: The SN information may include a maximum SN of the discarded data units. Alternatively, the SN information may include an SN determined based on the maximum SN of the discarded data units and an offset.

For example, if SNs of the discarded data units are 2, 5, 6, 7, and 8 respectively, the SN information includes 8. For another example, if the offset may be +1, the SN information includes 8+1=9. A specific value of the offset is not limited in embodiments of this application.

Example 1B: A start SN of a plurality of consecutive data units in the discarded data units and the number of the plurality of data units. The plurality of consecutive data units indicate that SNs of the plurality of data units are consecutive. The SN information may include one or more "start SN + number". For example, control signaling (refer to the following descriptions of step 302) may further include the number of "start SN + number".

For example, SNs of the discarded data units are 2, 3, 4, 6, 7, and 8 respectively. 2 to 4 are consecutive, and 6 to 8 are consecutive. Therefore, the SN information may include a start SN 2 + a number 3 and a start SN 6 + a number 3. The number of "start SN + number" is 2.

Example 1C: A start SN of the discarded data units and a bitmap (bitmap). Each bit in the bitmap corresponds to one data unit. A value of the bit indicates whether the data unit corresponding to the bit is discarded. A data unit corresponding to the first bit in the bitmap is a data unit of the start SN. Alternatively, the data unit corresponding to the first bit in the bitmap may be a data unit of an SN next to the start SN. For example, a value 1 of the bit indicates that the data unit is discarded, and a value 0 of the bit indicates that the data unit is not discarded.

For example, SNs of the discarded data units are 2, 3, 4, 6, 7, and 8 respectively. For example, the SN information may include a start SN 2 and a bitmap 1110111 or a bitmap 111011100. An SN of a data unit corresponding to the first bit in the bitmap may be the start SN 2, an SN of a data unit corresponding to the second bit in the bitmap is 3, an SN of a data unit corresponding to the third bit in the bitmap is 4, and so on, which are not enumerated herein. For another example, the SN information may include a start SN 2 and a bitmap 110111 or 11011100. An SN of a data unit corresponding to the first bit in the bitmap may be the SN 3, an SN of a data unit corresponding to the second bit in the bitmap is the SN 4, an SN of a data unit corresponding to the third bit in the bitmap is an SN 5, and so on, which are not enumerated herein. 00 at the end of the bitmap 111011100 or 11011100 may be used for octet alignment. Lengths of the bitmaps enumerated herein are merely examples. For example, a length of the bitmap may be 1 octet, 12 bits, 2 octets, or others, which are not enumerated herein.

A parameter maintained by a PDCP layer may be an SN, or may be a count (count). Therefore, the foregoing descriptions of the SN is also applicable to the count. Details are not described herein again.

For the foregoing example 1B and example 1C, the start SN may alternatively be an SN of the last data unit not discarded before the discarded data packet. A manner of setting the start SN is not limited in embodiments of this application.

The descriptions of the SN information herein are applicable to SN information of the first protocol layer of the transmitting end and SN information of a second protocol layer of the transmitting end. The numbers 1A to 1C and the following numbers 2A to 2C are all used to distinguish between different examples for ease of subsequent reference.

In this embodiment of this application, the SN information may include SN information of a transmitting PDCP layer and/or SN information of a transmitting RLC layer. The transmitting end may obtain the SN information in the following several examples:

Example 2A: The transmitting PDCP layer may maintain a timer for each data unit. When a timer associated with a data unit expires, it indicates that the transmitting PCDP layer may discard the data unit. If a timer associated with a data unit expires, the transmitting PDCP layer may send a second indication to the transmitting RLC layer. The second indication may indicate the transmitting RLC layer to discard the data unit.

In an example, the SN information of the transmitting PDCP layer may be an SN of the data unit. Alternatively, when the number of discarded data units reaches a discard threshold, the SN information of the transmitting PDCP layer may indicate SNs of a plurality of discarded data units. For example, the number of discarded data units indicated by the SN information of the transmitting PDCP layer may be equal to the discard threshold.

In this example, when the number of data units whose timers expire reaches a specific value (for example, the discard threshold), the transmitting PDCP layer may send a second indication to the transmitting RLC layer. The second indication may be SNs of the data units discarded by the transmitting PDCP layer. In this example, the second indication may be the SN information of the transmitting PDCP layer. A specific value of the discard threshold is not limited in embodiments of this application.

In another example, the SN information of the transmitting PDCP layer may be determined by the transmitting PDCP layer based on the timer associated with each data unit and/or a first indication of the transmitting RLC layer. For example, a data unit indicated by the SN information of the transmitting PDCP layer may be one or more data units whose associated timers expire and that are unsuccessfully received by a receiving RLC layer.

In this example, when the transmitting RLC layer receives a first RLC status report from the receiving RLC layer, the transmitting RLC layer may determine a successfully received data unit based on the first RLC status report, and then indicate the successfully received data unit to the transmitting PDCP layer by using the first indication. For example, after receiving the first indication, the transmitting PDCP layer may learn of the successfully received data unit based on the first indication, learn of an unsuccessfully received data unit based on the successfully received data unit, and then determine the SN information of the transmitting PDCP layer based on the unsuccessfully received data unit. For another example, after receiving the first indication, the transmitting PDCP layer may determine the SN information of the transmitting PDCP layer based on the first indication and the timer associated with each data unit. For example, after receiving the first indication, the transmitting PDCP layer may learn of the successfully received data unit based on the first indication, and learn of unsuccessfully received data units based on the successfully received data unit. Then, a data unit whose timer expires in the unsuccessfully received data units is used as the data unit indicated by the SN information of the transmitting PDCP layer.

In still another example, the SN information of the transmitting PDCP layer may be determined by the transmitting RLC layer based on the second indication of the transmitting PDCP layer and/or the first RLC status report. For example, the data unit indicated by the SN information of the transmitting PDCP layer may be one or more data units whose associated timers expire and that are unsuccessfully received by the receiving RLC layer. In specific implementation, there may be a specific deviation between the SN information of the transmitting PDCP layer determined by the transmitting PDCP layer and the SN information of the transmitting PDCP layer determined by the transmitting RLC layer. The deviation may be caused because the transmitting RLC layer receives the RLC status report sooner than the transmitting PDCP layer receives the first indication. Compared with the discarded data unit set, the deviation is small. Therefore, the deviation may be ignored in this embodiment of this application.

In this example, if a timer maintained in the transmitting PDCP layer expires, the transmitting PDCP layer may send a second indication to the transmitting RLC layer. The second indication may indicate the transmitting RLC layer to discard one or more data units. All timers associated with the one or more data units expire. For example, after receiving the second indication, the transmitting RLC layer may learn of, based on the second indication, the one or more data units that need to be discarded, and then generate the SN information of the transmitting PDCP layer based on the one or more discarded data units. For another example, after receiving the second indication, the transmitting RLC layer may learn of, based on the second indication, the one or more data units that need to be discarded, and after receiving the first RLC status report from the receiving RLC layer, the transmitting RLC layer may learn of an unsuccessfully received data unit based on the first RLC status report. The transmitting RLC layer may use an unsuccessfully received data unit in the one or more data units that need to be discarded as the data unit indicated by the SN information of the transmitting PDCP layer.

Example 2B: The transmitting PDCP layer may maintain a timer for each data unit set. If a timer associated with a data unit set expires, it indicates that the transmitting PCDP layer may discard the data unit set. If a timer associated with a data unit set expires, the transmitting PDCP layer may send a second indication to the transmitting RLC layer. The second indication may indicate the transmitting RLC layer to discard the data unit set.

In an example, the SN information of the transmitting PDCP layer may be determined by the transmitting PDCP layer based on the timer associated with each data unit set and/or a first indication. For example, a data unit indicated by the SN information of the transmitting PDCP layer may be a data unit that belongs to a data unit set whose associated timer expires and that is unsuccessfully received by a receiving RLC layer.

In this example, if a timer associated with a data unit set expires, the transmitting PDCP layer may determine that the data unit set needs to be discarded. For example, the data unit indicated by the SN information of the transmitting PDCP layer is one or more data units in the data unit set whose timer expires. For another example, the transmitting PDCP layer may alternatively learn of a successfully received data unit based on the first indication sent by the transmitting RLC layer, learn of an unsuccessfully received data unit based on the successfully received data unit, and then use an unsuccessfully received data unit in the data unit set whose timer expires as the data unit indicated by the SN information of the transmitting PDCP layer. In this example, the second indication may be SN information of a data unit that is in the discarded data unit set and that is not acknowledged by the receiving RLC layer as successfully delivered. For example, the second indication sent by the transmitting PDCP layer to the transmitting RLC layer may include the SN information of the transmitting PDCP layer, or the second indication may be the SN information of the transmitting PDCP layer. Alternatively, the second indication may be SN information of one or more data units in the discarded data unit set. If all data units in the data unit set are successfully received by the receiving RLC layer, the transmitting end may not send the SN information of the transmitting PDCP layer to the receiving RLC layer.

In another example, the SN information of the transmitting PDCP layer may be determined by the transmitting RLC layer based on a second indication of the transmitting PDCP layer and/or a first RLC status report. For example, the data unit indicated by the SN information of the transmitting PDCP layer may be a data unit that belongs to a data unit set whose associated timer expires and that is unsuccessfully received by the receiving RLC layer.

In this example, if a timer associated with a data unit set expires, the transmitting PDCP layer may determine that the data unit set needs to be discarded, and send a second indication to the transmitting RLC layer based on the data unit set. For example, the transmitting RLC layer may learn of, based on the second indication, the data unit set that needs to be discarded, learn of an unsuccessfully received data unit based on the first RLC status report from the receiving RLC layer, and use an unsuccessfully received data unit in the data unit set that needs to be discarded as the data unit indicated by the SN information of the transmitting PDCP layer. For how the transmitting RLC layer determines the SN information of the transmitting PDCP layer based on the first RLC status report or the second indication, details are not described herein again.

Example 2C: The SN information of the transmitting RLC layer may be determined by the transmitting RLC layer based on a second indication of the transmitting PDCP layer and/or a first RLC status report. For example, the SN information of the transmitting RLC layer may be an SN of a data unit that is unsuccessfully received by the receiving RLC layer and that is indicated by the first RLC status report. For another example, the SN information may be an SN of a discarded data unit indicated by the second indication of the transmitting PDCP layer. For another example, the SN information may be an SN of a data unit that is discarded by the transmitting PDCP layer and that is unsuccessfully received by the receiving RLC layer.

The second indication shown in the foregoing example 2B is used as an example. After receiving the second indication of the transmitting PDCP layer, the transmitting RLC layer may learn of, based on the second indication, the data unit set that needs to be discarded, and use an unsuccessfully received data unit in the data unit set that needs to be discarded as a data unit indicated by the SN information of the transmitting RLC layer. For another example, the second indication received by the transmitting RLC layer may be SN information of a data unit that is in the discarded data unit set and that is not acknowledged by the receiving RLC layer as successfully delivered. In this case, the transmitting RLC layer may generate the SN information of the RLC layer based on the second indication.

The foregoing example 2A and example 2B may be combined with the example 2C. For example, the SN information of the transmitting PDCP layer may be determined by the transmitting PDCP layer, and the SN information of the transmitting RLC layer may be determined by the transmitting RLC layer. For another example, both the SN information of the transmitting PDCP layer and the SN information of the transmitting RLC layer may be determined by the transmitting RLC layer. Specific combination manners are not described in detail one by one herein.

For a UM mode, because the RLC layer does not support an ARQ retransmission mechanism, when the RLC layer uses the UM mode, the RLC status report may not be included in the foregoing examples.

For ease of description, in this embodiment of this application, the SN information of the transmitting PDCP layer may be referred to as PDCP SN information for short, and the SN information of the transmitting RLC layer may be referred to as RLC SN information for short. For example, the data unit indicated by the SN information of the transmitting PDCP layer may be the same as the data unit indicated by the SN information of the transmitting RLC layer. For example, in the first example in which the transmitting PDCP layer determines the SN information of the transmitting PDCP layer in the example 2B, and in the example 2C in which the transmitting RLC layer determines the SN information of the transmitting RLC layer based on the second indication of the transmitting PDCP layer, data units indicated by the two pieces of SN information may be the same. For example, the data unit indicated by the SN information of the transmitting PDCP layer may be different from the data unit indicated by the SN information of the transmitting RLC layer. For example, in the second example in which the transmitting RLC layer determines the SN information of the transmitting PDCP layer based on the second indication in the example 2B, and in the example 2C in which the transmitting RLC layer determines the SN information of the transmitting RLC layer based on the first RLC status report, data units indicated by the two pieces of SN information may be different. Specific examples are not enumerated in this embodiment of this application.

402. The transmitting end sends the SN information to a second protocol layer of a receiving end by using control signaling of the second protocol layer of the transmitting end. Correspondingly, the receiving end receives the SN information by using the second protocol layer of the receiving end.

In an example 3A, the first protocol layer is a PDCP layer, and the second protocol layer is an RLC layer.

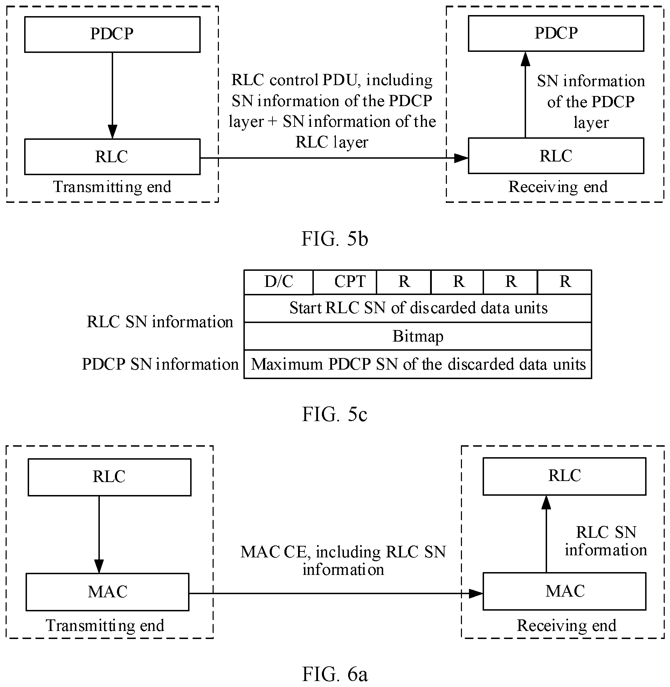

Step 402 may include: As shown in FIG. 5a, the transmitting end sends the PDCP SN information to the receiving RLC layer by using control signaling of the transmitting RLC layer. Correspondingly, the receiving end receives the PDCP SN information by using the receiving RLC layer. Alternatively, step 402 may include: As shown in FIG. 5b, the transmitting end sends the PDCP SN information and the RLC layer SN information to the receiving RLC layer by using control signaling of the transmitting RLC layer.

The control signaling includes an RLC control PDU (RLC control PDU). For example, the RLC control PDU may include a data/control (data/control, D/C) field, and a value of the D/C field may indicate that the PDU is an RLC control PDU. In addition, the RLC control PDU may further include a control PDU type (control PDU type, CPT) field. A value of the control PDU type field indicates that the control PDU is used to transfer PDCP SN information corresponding to a discarded data unit, or corresponding PDCP SN information + RLC SN information. Alternatively, the control PDU type field may include specific PDCP SN information, or PDCP SN information + RLC SN information. For example, FIG. 5c is a diagram of a format of an RLC control PDU according to an embodiment of this application. The RLC control PDU is shown by using an example of including RLC SN information and PDCP SN information, which should not be construed as a limitation on embodiments of this application. R shown in FIG. 5c represents reserved (reserved, R).

The RLC control PDU has a higher processing priority than an RLC data PDU (RLC data PDU). Therefore, the transmitting RLC layer may preferentially send the RLC control PDU. The transmitting RLC layer preferentially sends the RLC control PDU, so that the receiving RLC layer can receive the RLC control PDU as soon as possible. After receiving the RLC control PDU, the receiving RLC layer may deliver the SN information of the transmitting PDCP layer to the receiving PDCP layer.

According to the method provided in this embodiment of this application, a delay in sending the SN information of the transmitting PDCP layer to the receiving PDCP layer and a delay in sending the SN information of the transmitting RLC layer to the receiving RLC layer are effectively shortened. Therefore, the receiving PDCP layer/the receiving RLC layer can update, in time based on the SN information of the transmitting PDCP layer/the receiving RLC layer, a variable maintained by the receiving PDCP layer/the receiving RLC layer. This effectively avoids an extra reordering delay caused because the transmitting PDCP layer discards the data unit and the receiving PDCP layer still performs a reordering process and waits for the discarded data unit, and effectively avoids a case in which the receiving RLC layer still requires retransmission from the transmitting RLC layer though the data unit is discarded. Therefore, according to the method provided in this embodiment of this application, an end-to-end transmission delay of service data is effectively reduced, user service experience is improved, and resources for data unit retransmission are saved.

Generally, the SN information of the transmitting PDCP layer is considered as an RLC SDU after arriving at the transmitting RLC layer, and the transmitting RLC layer processes the RLC SDU in sequence, which increases a transmission delay of the SN information. Consequently, the receiving PDCP layer cannot update in time the variable maintained by the receiving PDCP layer, and the receiving PDPC layer cannot update a window in time. In addition, after the SN information of the transmitting PDC layer arrives at the transmitting RLC layer, the transmitting RLC layer also processes the SN information of the transmitting RLC layer in sequence. However, in this embodiment of this application, after the SN information of the transmitting PDCP layer arrives at the transmitting RLC layer, the transmitting RLC layer includes the SN information into the RLC control PDU, so that the transmitting RLC layer can preferentially process the RLC control PDU, thereby effectively reducing a queuing delay of the SN information, and the receiving PDCP layer can quickly receive the SN information, thereby quickly pushing the window of the receiving PDCP layer and updating the variable maintained by the receiving PDCP layer.

In another example 3B, the first protocol layer is an RLC layer, and the second protocol layer is a MAC layer.

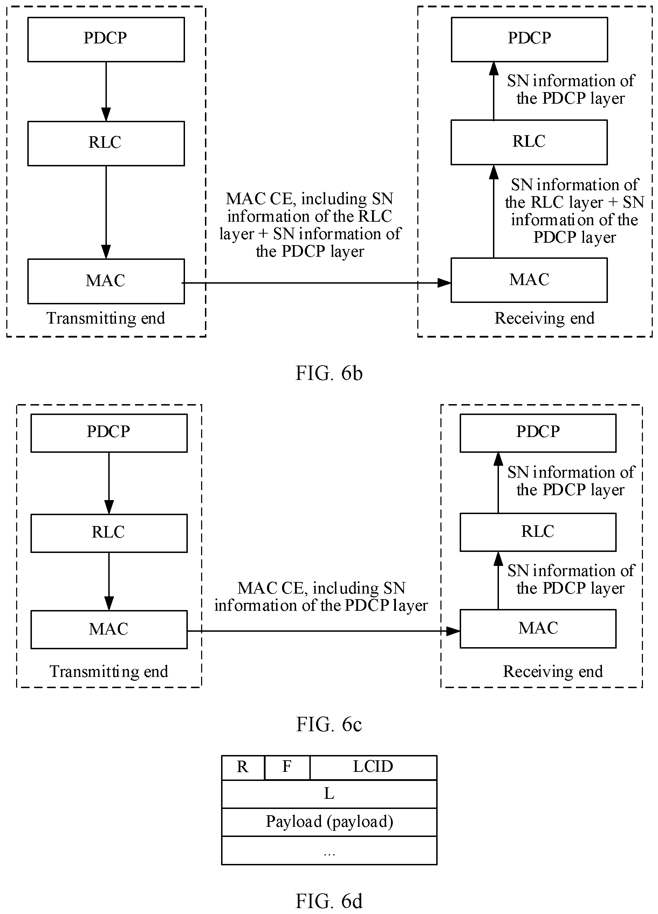

Step 402 may include: As shown in FIG. 6a, the transmitting end sends the SN information of the RLC layer to the receiving MAC layer by using control signaling of the transmitting MAC layer. Correspondingly, the receiving MAC layer receives the SN information of the RLC layer. Alternatively, step 402 may include: As shown in FIG. 6b, the transmitting end sends the SN information of the transmitting RLC layer and the SN information of the transmitting PDCP layer to the receiving MAC layer by using control signaling of the transmitting MAC layer. Correspondingly, the receiving MAC layer receives the SN information of the transmitting RLC layer and the SN information of the transmitting PDCP layer. For related descriptions of obtaining the SN information of the RLC layer by the transmitting end, refer to the foregoing example 2C. For related descriptions of obtaining the SN information of the PDCP layer by the transmitting end, refer to the foregoing example 2A and example 2B. Details are not described herein again.

The control signaling includes a MAC CE. FIG. 6d is a diagram of a format of a MAC CE according to an embodiment of this application. As shown in FIG. 6d, R represents reserved, F represents whether a length (length, L) of payload is one octet, two octets, or the like, LCID represents a logical channel identifier (logical channel identifier, LCID), and the payload may include the SN information of the transmitting PDCP layer and/or the SN information of the transmitting RLC layer.

Generally, after receiving a MAC SDU, the transmitting MAC layer processes the MAC SDU in sequence, which results in a long queuing delay of a MAC SDU carrying the SN information, and increases a transmission delay of the SN information. Consequently, the receiving RLC layer/the receiving PDCP layer cannot update in time the variable maintained by the receiving RLC layer/the receiving PDCP layer, and the receiving RLC layer/the receiving PDCP layer cannot update the window in time. However, in this embodiment of this application, the transmitting MAC layer includes the SN information into the MAC CE, so that the MAC CE can be preferentially processed, thereby reducing a queuing delay of the SN information, and the receiving RLC layer/the receiving PDCP layer can quickly receive the SN information, thereby quickly pushing the window of the receiving RLC layer/the receiving PDCP layer and updating the variable maintained by the receiving RLC layer/the receiving PDCP layer.

In still another example 3C, the first protocol layer is a PDCP layer, and the second protocol layer is a MAC layer.

Step 302 may include: As shown in FIG. 6c, the transmitting end sends the SN information of the PDCP layer to the receiving MAC layer by using control signaling of the transmitting MAC layer. Correspondingly, the receiving MAC layer receives the SN information of the PDCP layer. Alternatively, step 302 may include: The transmitting end sends the SN information of the transmitting RLC layer and the SN information of the transmitting PDCP layer to the receiving MAC layer by using control signaling of the transmitting MAC layer. Correspondingly, the receiving MAC layer receives the SN information of the transmitting RLC layer and the SN information of the transmitting PDCP layer. For specific descriptions of the example 3C, refer to the example 3B, the example 2A to the example 2C, and the like. Details are not described herein again.

403. The second protocol layer of the receiving end sends SN information to a first protocol layer of the receiving end, and the first protocol layer of the receiving end receives the SN information.

FIG. 5a is a diagram of interaction about SN information according to an embodiment of this application. As shown in FIG. 5a, after receiving the SN information of the transmitting PDCP layer, the receiving RLC layer may deliver the SN information of the transmitting PCDP layer to the receiving PDCP layer.

FIG. 5b is another diagram of interaction about SN information according to an embodiment of this application. As shown in FIG. 5b, after receiving the SN information of the transmitting PDCP layer and the SN information of the transmitting RLC layer, the receiving RLC layer may deliver the SN information of the transmitting PDCP layer to the receiving PDCP layer.

FIG. 6a is still another diagram of interaction about SN information according to an embodiment of this application. As shown in FIG. 6a, after receiving the SN information of the transmitting MAC layer, the receiving MAC layer may deliver the SN information of the transmitting RLC layer to the receiving RLC layer.

FIG. 6b is still another diagram of interaction about SN information according to an embodiment of this application. As shown in FIG. 6b, after receiving the SN information of the transmitting PDCP layer and the SN information of the transmitting RLC layer, the receiving MAC layer may deliver the SN information of the transmitting PDCP layer and the SN information of the transmitting RLC layer to the receiving RLC layer, and the receiving RLC layer may deliver the SN information of the transmitting PDCP layer to the receiving PDCP layer. The manner shown in FIG. 6b in which the receiving MAC layer delivers the SN information of the transmitting PDCP layer and the SN information of the transmitting RLC layer to an upper layers is merely an example. For example, the receiving MAC layer may separately deliver the SN information of the transmitting RLC layer to the receiving RLC layer and deliver the SN information of the transmitting PDCP layer to the receiving PDCP layer.

FIG. 6c is still another diagram of interaction about SN information according to an embodiment of this application. As shown in FIG. 6c, after receiving the SN information of the transmitting PDCP layer, the receiving MAC layer may deliver the SN information of the PDCP layer to the RLC layer, and the RLC layer may deliver the SN information of the transmitting PDCP layer to the receiving PDCP layer. Alternatively, after receiving the SN information of the transmitting PDCP layer, the receiving MAC layer may deliver the SN information of the PDCP layer to the receiving PDCP layer.

Protocol stacks shown in FIG. 5a, FIG. 5b, FIG. 6a, FIG. 6b, and FIG. 6c are merely examples. In specific implementation, the RLC layer and the PDCP layer may be deployed in different functional modules or chips, and the MAC layer and the RLC layer may also be deployed in different functional modules or chips. This is not limited in embodiments of this application. For specific descriptions of the RLC layer and the PDCP layer that are separately deployed in different functional modules, refer to Table 1 to Table 6 below.

In a possible implementation, the method shown in FIG. 4 further includes step 404 and step 405. A sequence of step 404 and step 405 is not limited in embodiments of this application.

404. The first protocol layer of the receiving end updates, based on the SN information of the first protocol layer of the transmitting end, a variable maintained by the first protocol layer of the receiving end.

405. The second protocol layer of the receiving end updates, based on the SN information of the second protocol layer of the transmitting end, a variable maintained by the second protocol layer of the receiving end.

The following describes in detail a method for updating variables by the first protocol layer and the second protocol layer.

In an example, in the UM mode, the receiving RLC layer may maintain the following variables:
(1) RX_Next_Highest: It is an upper bound of a reassembly window, and a variable value is equal to a maximum SN of received data units that have not been reassembled plus 1.
(2) RX_Next_Reassembly: It is equal to an SN of the first to-be-reassembled RLC SDU.
(3) RX_Timer_Trigger: It is equal to a value of RX_Next_Highest when a reassembly timer is started.

In another example, in an AM mode, the receiving RLC layer may maintain the following variables:
(1) RX_Next: It is a lower bound of an RLC receiving window, indicating a next SN of an RLC SDU received by the receiving RLC layer in sequence. For example, all RLC SDUs whose SNs are less than RX_Next have been reassembled.
(2) RX_Next_Highest: It indicates a maximum SN of RLC SDUs received by the receiving RLC layer plus 1.
(3) RX_Next_Status_Trigger: A variable value is equal to a value of RX_Next_Highest when a reassembly timer is triggered.
(4) RX_Highest_Status: It is a possible maximum value of an "ACK_SN" field in an RLC status report.

The foregoing enumerated variables maintained by the receiving RLC layer are merely examples. For specific descriptions of a variable or a window, refer to a related standard. This is not limited in embodiments of this application.

Generally, for example, in the AM mode, only when a data unit whose SN is equal to the lower bound RX_Next of the receiving window is successfully reassembled and delivered to an upper layer, the receiving RLC layer updates a value of RX_Next. If the data unit is unsuccessfully received, the receiving RLC layer indicates, by using an RLC status report, the transmitting end to retransmit the data unit until the data unit is successfully received or a maximum number of retransmissions is reached. Therefore, if the transmitting end has determined to discard the data unit, the receiving RLC layer cannot update in time the variable maintained by the receiving RLC layer, and continuously requests retransmission of the discarded data unit, resulting in a waste of air interface resources and device energy and an increase in a transmission delay, and even affecting normal service running due to a radio link failure triggered when the maximum number of retransmissions is reached.

In this embodiment of this application, the receiving RLC layer can quickly obtain the SN information of the transmitting RLC layer, and then update, in time based on the SN information of the transmitting RLC layer, the variable and the window maintained by the receiving RLC layer. For example, the receiving RLC layer may determine, based on the SN information of the transmitting RLC layer, the maximum SN of the data units discarded by the transmitting end, and update the value of RX_Next to an SN that is greater than the maximum SN in the SN information and that corresponds to an incompletely received RLC SDU. For example, the receiving RLC layer may discard all segmented data units whose RLC SNs are less than the updated RX_Next. For example, when determining that a value of RX_Next_Highest is less than the updated RX_Next, the receiving RLC layer updates RX_NEXT_Highest to RX_NEXT. The receiving RLC layer updates in time the variable and the window maintained by the receiving RLC layer, so that the receiving RLC layer can be effectively prevented from continuously requesting retransmission of a discarded data unit, thereby saving air interface resources for retransmission.

For example, the variable maintained by the receiving PDCP layer may include:
(1) RX_DELIV. It is used to identify a lower bound of a PDCP receiving window, for example, indicating a count (count or COUNT) value of the first PDCP SDU that is not delivered to an upper layer and for which the receiving end still waits.
(2) RX_NEXT: It is equal to a maximum count value of currently received data units plus 1.
(3) RX_REORD: It is equal to a value of RX_NEXT when a reordering timer is started.

Generally, when in-order delivery is configured for the PDCP layer, if a data unit is discarded, count values in a receiving window of the receiving PDCP layer are discontinuous, which continuously triggers the reordering timer, and consumes processing resources of the receiving end. Only when the reordering timer expires, the receiving PDCP layer is allowed to deliver a data unit to an upper layer. Consequently, a processing delay at the receiving end is increased, and timely delivery of a subsequent data unit is affected.

In this embodiment of this application, the receiving PDCP layer can quickly obtain the SN information of the transmitting PDCP layer, and then update, in time based on the SN information of the transmitting PDCP layer, the variable and the window maintained by the receiving PDCP layer. For example, the receiving PDCP layer may determine, based on the SN information of the transmitting PDCP layer, the maximum count value of the data units discarded by the transmitting end, and update RX_DELIV to a count value that is greater than the maximum count value and that corresponds to a PDCP SDU not received. For example, the receiving PDCP layer may discard all PDCP data units in a receiving PDCP buffer whose count values are less than the updated RX_DELIV. The receiving PDCP layer updates in time the variable and the window maintained by the receiving PDCP layer, so that resource consumption caused by continuously triggering the reordering timer can be effectively avoided, resources are saved, and a delay in processing a subsequent data unit can be effectively reduced.

In a possible implementation, the method shown in FIG. 4 may further include:

The receiving RLC layer sends a third RLC status report. Correspondingly, the transmitting RLC layer receives the third RLC status report. The third RLC status report may indicate that one or more data units in the data units indicated by the SN information are successfully received.

The third RLC status report may indicate that a data unit in the SN information is successfully received by the receiving RLC layer, so that it can be effectively indicated that the SN information carried in the RLC control PDU of the transmitting RLC layer is correctly received, and the receiving RLC layer considers that the data unit is successfully received. The receiving RLC layer may indicate, by using one or more third RLC status reports, that all the data units in the SN information are successfully received.

In this embodiment of this application, a condition for triggering the third RLC status report may be that the receiving RLC layer updates the receiving window and the variable based on the RLC control PDU. For example, the receiving RLC layer updates, based on the RLC control PDU, the variable RX_Next maintained by the receiving RLC layer. Alternatively, the condition for triggering the third RLC status report may be that the receiving RLC layer considers, based on the RLC control PDU, that the data unit indicated by the RLC SN information is successfully received. In this embodiment of this application, when the transmitting end receives the third RLC status report and the third RLC status report indicates that one or more data units in the data units indicated by the first SN information are successfully received, the transmitting end may learn, based on the third RLC status report, that the receiving end has received the first SN information, and the transmitting end may clear, in time based on the third RLC status report, the first SN information buffered by the transmitting end or the data units indicated by the first SN information.

In another possible implementation, the method shown in FIG. 4 may further include:
(a) After receiving the second indication of the transmitting PDCP layer, the transmitting RLC layer does not discard an RLC SDU and a corresponding segment, or the transmitting RLC entity does not discard an RLC SDU and a corresponding segment that have been delivered to a lower layer for transmission, that is, an RLC SDU not delivered to the lower layer for transmission may be discarded. The not discarding the data packet indicates that the corresponding RLC SDU and the corresponding segment can still be saved in a buffer of the RLC layer. Before the receiving RLC layer receives the RLC control PDU, the receiving RLC layer may normally trigger an RLC status report (for example, a second RLC status report), to request retransmission of an unsuccessfully received RLC SDU. Because the transmitting RLC layer does not trigger active packet discarding, the RLC SDU and the corresponding segment are still in the buffer of the RLC layer. Therefore, after the transmitting RLC layer receives the RLC status report from the receiving RLC layer, the transmitting RLC layer can still normally retransmit the data unit requested to be retransmitted.
(b) After receiving the second indication of the transmitting PDCP layer, the transmitting RLC layer may discard an RLC SDU and a corresponding segment. The receiving RLC layer sends a second RLC status report to the transmitting RLC layer, and an unsuccessfully received data unit indicated by the second RLC status report includes a data unit indicated by the SN information. For example, the second RLC status report carries a NACK of a discarded RLC SDU/SDU segment.

In an example, the transmitting RLC layer receives the second RLC status report, and may retransmit, based on the second RLC status report, the SN information of the transmitting PDCP layer and the SN information of the transmitting RLC layer. That is, if the unsuccessfully received data unit indicated in the second RLC status report received by the transmitting RLC layer includes a data unit indicated by the SN information, the transmitting RLC layer may learn, based on the second RLC status report, that the receiving RLC layer may have not received the SN information of the transmitting PDCP layer or the SN information of the transmitting RLC layer. In this case, the transmitting RLC layer may retransmit the SN information of the transmitting PDCP layer and the SN information of the transmitting RLC layer.

In another example, the transmitting RLC layer receives the second RLC status report, and may send new SN information based on the second RLC status report. The SN information may include SN information of the transmitting RLC layer and SN information of the transmitting PDCP layer that indicate discarded data units starting from the first data unit unsuccessfully received by the receiving RLC layer in the previous SN information. That is, if the unsuccessfully received data unit indicated in the second RLC status report received by the transmitting RLC layer includes a data unit indicated by the SN information, the transmitting RLC layer may learn, based on the second RLC status report, that the receiving RLC layer may have not received the SN information of the transmitting PDCP layer or the SN information of the transmitting RLC layer. In this case, the transmitting RLC layer may regenerate SN information. A data unit indicated by the SN information may be the same as the data unit indicated by the SN information sent last time, or may be different from the data unit indicated by the SN information sent last time.

In this embodiment of this application, when the transmitting end receives the second RLC status report and the unsuccessfully received data unit indicated by the second RLC status report includes a data unit indicated by the SN information, the transmitting end may learn, based on the second RLC status report, that the receiving end may have not received the SN information, so that the transmitting end can retransmit the SN information in time, thereby avoiding a large data transmission delay caused by continuous reordering performed by the first protocol layer of the receiving end due to the data unit discarded by the first protocol layer of the transmitting end or a large data transmission delay caused by continuous retransmission requirements of the first protocol layer of the receiving end due to the data unit discarded by the first protocol layer of the transmitting end, and effectively reducing an end-to-end transmission delay of service data.

Both of the foregoing manners (a) and (b) can effectively avoid a case in which when the RLC control PDU is lost, the transmitting end still considers that the receiving end has successfully received the RLC control PDU. Even if the RLC control PDU does not have an RLC SN, the transmitting RLC layer can still learn of whether the receiving RLC layer successfully receives the RLC control PDU, thereby improving reliability of RLC control PDU transmission, and effectively avoiding stalling, caused by unreliable RLC control PDU transmission, of the receiving window maintained by the receiving RLC layer/the receiving PDCP layer.

In this embodiment of this application, the transmitting end sends the SN information of the first protocol layer of the transmitting end by using the control signaling of the second protocol layer of the transmitting end, so that a processing priority of the control signaling can be fully used, and the second protocol layer of the receiving end can quickly receive the SN information and deliver the SN information to the first protocol layer. After quickly receiving the SN information of the first protocol layer, the first protocol layer of the receiving end can effectively update, by using the SN information, the variable and the window maintained by the first protocol layer of the receiving end, thereby reducing a delay in processing a subsequent data unit by the first protocol layer of the receiving end.

The following describes, with reference to a specific scenario, the data processing method shown in FIG. 4.

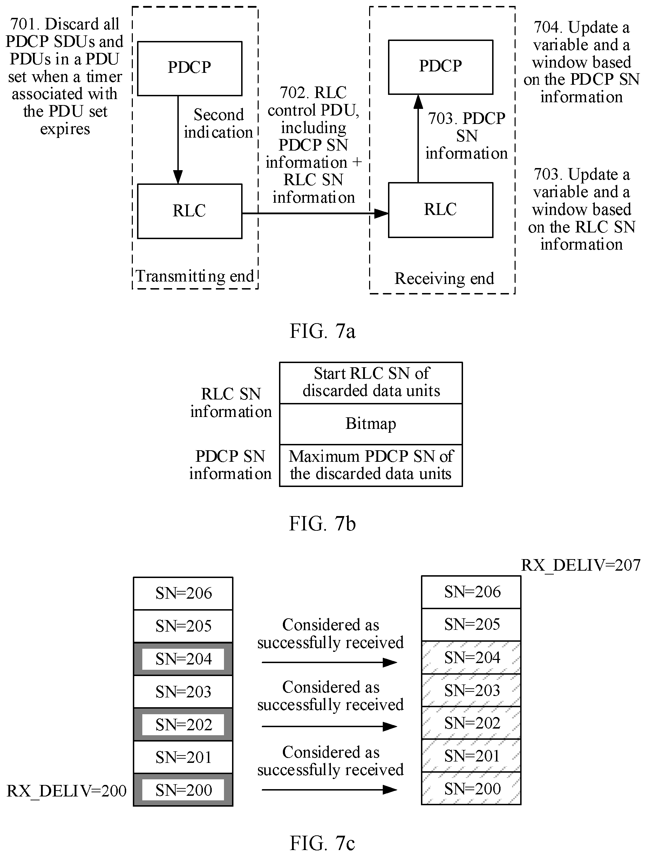

FIG. 7a is a diagram of a scenario of a data processing method according to an embodiment of this application. FIG. 7a shows an example in which a mode of an RLC layer is an AM mode and the AM RLC layer is associated with a DRB. In addition, FIG. 7a shows an example in which a PDCP layer associates each data unit set (that is, each PDU set) with a discard timer (discard timer) (as shown in the foregoing example 2B). As shown in FIG. 7a, the method includes the following steps.

701. A transmitting PDCP layer discards all PDCP SDUs and PDUs in a PDU set when a timer associated with the PDU set expires.

For a data unit that has been delivered to a transmitting RLC layer, the transmitting PDCP layer may indicate the transmitting RLC layer to discard the corresponding data unit. As shown in FIG. 7a, the transmitting PDCP layer may indicate, by using a second indication, the transmitting RLC layer to discard a data unit corresponding to the PDU set. The timer in step 701 may also be referred to as a discard timer. A specific name of the timer is not limited in embodiments of this application.

In an example, the transmitting PDCP layer may indicate the transmitting RLC layer to discard a corresponding data unit based on a data unit that is not acknowledged by a receiving RLC layer as successfully delivered. In this example, the second indication (the second indication includes SN information of the transmitting PDCP layer) may be SN information of a data unit that is in the discarded PDU set and that is not acknowledged by the receiving RLC layer as successfully delivered. After receiving the second indication, the transmitting RLC layer may send the PDCP SN information and SN information of the transmitting RLC layer to the receiving RLC layer. For specific descriptions of this example, refer to the first example in the foregoing example 2B or the example 2C. Details are not described herein again.

In another example, after receiving the second indication, the transmitting RLC layer determines that the discarded PDU set includes a data unit that is not acknowledged by the receiving RLC layer as successfully delivered, and then sends PDCP SN information and RLC SN information to the receiving RLC layer. For specific descriptions of this example, refer to the second example in the foregoing example 2B or the example 2C. Details are not described herein again.

702. The transmitting RLC layer sends the PDCP SN information and the RLC SN information to the receiving RLC layer by using an RLC control PDU.

That is, RLC SN information of the discarded data unit and PDCP SN information of the discarded data unit are carried by the RLC control PDU.

In an example, the RLC SN information of the data unit discarded by the transmitting end may be represented in one of the following forms:
(1) A maximum RLC SN in actively discarded data units, or the maximum RLC SN + 1: For specific descriptions of this example, refer to the foregoing example 1A.
(2) One or more "start RLC SN of consecutive discarded data units + number of consecutive discarded data units": For example, a "start RLC SN of consecutive discarded data units + number of consecutive discarded data units" is referred to as a data block with consecutive discarding. For example, RLC SNs corresponding to the data units actively discarded by the transmitting RLC entity are 2, 3, 4, 6, 7, and 8 respectively. In this case, an "RLC SN 2 + number 3 of consecutive discarded data units" may indicate that three data units corresponding to the RLC SNs 2, 3, and 4 are discarded, and an "RLC SN 6 + number 3 of consecutive discarded data units" may indicate that three data units corresponding to the RLC SNs 6, 7, and 8 are discarded. In this implementation form, the RLC control PDU may additionally carry a field about the number of data blocks with consecutive discarding, to indicate the number of "start RLC SN of consecutive discarded data units + number of consecutive discarded data units" included in the current RLC control PDU. For specific descriptions of this example, refer to the foregoing example 1B.
(3) A start RLC SN + a bitmap: The start RLC SN may indicate an SN of the first discarded data unit or an SN of the first data unit not discarded. For example, the start RLC SN indicates the SN of the first discarded data unit. When RLC SNs corresponding to the data units actively discarded by the transmitting RLC entity are 2, 3, 4, 6, 7, and 8 respectively, RLC SN=2 and bitmap=11011100 may be carried to indicate the RLC SN information. '110111' in the bitmap indicate that data units corresponding to the RLC SNs 3, 4, 6, 7, and 8 are discarded, and a data unit corresponding to RLC SN=5 is not discarded. '00' at the end are used for octet alignment. For specific descriptions of this example, refer to the foregoing example 1C.

In another example, the PDCP SN information of the data unit discarded by the transmitting end may be represented in one of the following forms:
(1) A maximum PDCP SN in actively discarded data units, the PDCP SN + 1, a maximum PDCP COUNT, or the PDCP COUNT + 1.
(2) One or more "start PDCP SN/COUNT of consecutive discarded data units + number of consecutive discarded data units".
(3) A start PDCP SN/COUNT + a bitmap: Each bit in the bitmap indicates whether a data unit corresponding to a subsequent SN/COUNT is actively discarded.

For specific descriptions of the PDCP SN information, refer to the foregoing descriptions of the RLC SN information, or refer to the foregoing example 1A to example 1C.

FIG. 7b is a diagram of SN information according to an embodiment of this application. As shown in FIG. 7b, the RLC SN information included in the RLC control PDU may be in a form of a start RLC SN + a bitmap, and the PDCP SN information included in the RLC control PDU may be in a form of a maximum PDCP SN in discarded data units. Certainly, FIG. 7b is merely an example. The RLC SN information and the PDCP SN information in the RLC control PDU may alternatively be in other combination forms, which are not enumerated in this embodiment of this application.

703. After receiving the RLC control PDU, the receiving RLC layer may update an RLC receiving window and variable based on the RLC SN information, and deliver the PDCP SN information to a receiving PDCP layer.

The RLC receiving window and variable are updated based on the RLC SN information carried in the RLC control PDU. For example, the receiving RLC layer may consider that the data unit actively discarded by the transmitting end is successfully received. As shown in FIG. 7b, the receiving RLC layer may consider that all data units whose RLC SNs are less than the RLC SN carried in the RLC control PDU are successfully received. When an RLC status report is subsequently fed back, NACK information is not indicated for the corresponding data units. For related descriptions of the RLC status report, refer to the foregoing third RLC status report.

704. After receiving the PDCP SN information of the actively discarded data unit indicated by the receiving RLC layer, the receiving PDCP layer updates a PDCP receiving window and variable based on the PDCP SN information.

For example, the receiving PDCP layer may further consider that the data unit actively discarded by the transmitting end is successfully received.

FIG. 7c is a diagram of updating a receiving window by a receiving PDCP layer according to an embodiment of this application. As shown in FIG. 7c, data units corresponding to COUNT=200, COUNT=202, and COUNT=204 in a receiving PDCP buffer are not received, and a current lower bound, corresponding to RX_DELIV, of the window is 200. The received PDCP SN information indicates that a maximum COUNT value of actively discarded data units is 204. The receiving PDCP layer may consider that the data units corresponding to COUNT=200, COUNT=202, and COUNT=204 are successfully received, and update RX_DELIV to 207.

FIG. 7a is specific to an AM DRB. For a UM DRB, after receiving PDCP SN information, the transmitting RLC layer includes the PDCP SN information into an RLC control PDU. After receiving the PDCP SN information, the receiving RLC layer delivers the PDCP SN information to the receiving PDCP layer, and the receiving PDCP layer may update, based on the PDPC SN information, the variable/window maintained by the receiving PDCP layer.

In this embodiment of this application, when the transmitting PDCP layer entity triggers discarding of the PDU set (the discard timer associated with the PDU set expires), the PDCP SN information and the RLC SN information are quickly transferred to the receiving end by using the RLC control PDU. In this way, the receiving RLC layer and the receiving PDCP layer can quickly push the windows, thereby avoiding an extra waiting delay caused by unnecessary reordering of the receiving end to data transmission, reducing an end-to-end transmission delay of service data, and improving user service experience. The PDCP packet discarding information is delivered, so that the PDCP receiving window can be quickly pushed.

The following describes, by using an example in which a receiving end is a network device, the data processing method provided in embodiments of this application.

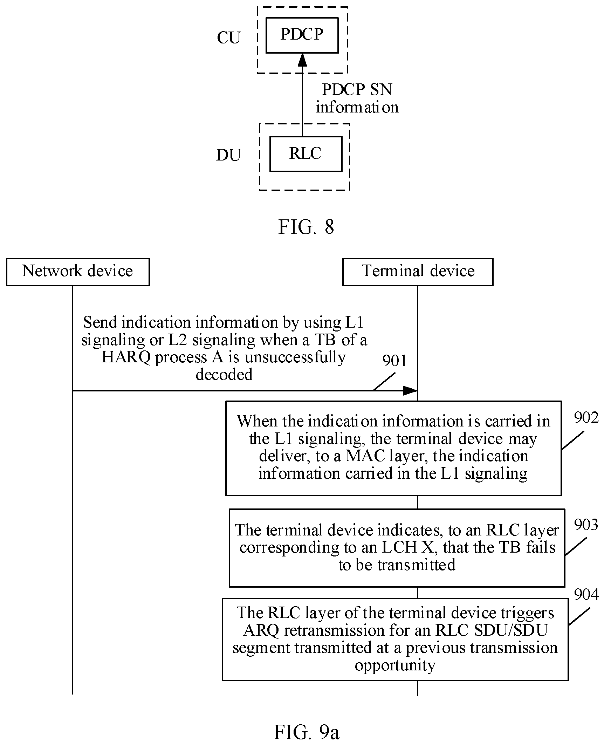

FIG. 8 is a diagram of a scenario of a data processing method in a CU-DU split architecture according to an embodiment of this application. As shown in FIG. 8, when a network device such as a base station serves as a receiving end, after receiving an RLC control PDU, a receiving RLC layer on a DU may update a window/variable based on RLC SN information, and deliver PDCP SN information to a receiving PDCP layer. After receiving the PDCP SN information, the receiving PDCP layer on a CU may update a window/variable based on the PDCP SN information.

This embodiment of this application provides a new frame. The frame may be used to transfer the PDCP SN information. For example, the DU may send, to the CU through F1-U (which is merely an example) interface, the frame carrying the PDCP SN information. For example, the frame may be referred to as a discard status (discard status) frame, an uplink (uplink, UL) discard status frame, or the like. For ease of description, the following uses the UL discard status frame as an example for description. Related descriptions of PDCP SN information indicated in the following Table 1 to Table 7 are also applicable to the foregoing example 1A to example 1C and the PDCP SN information.

In an example, Table 1 shows a format example of a UL discard status frame according to an embodiment of this application. A form of PDCP SN information in the UL discard status frame may be the same as the form (for example, the foregoing example 1A to example 1C) of the SN information in the RLC control PDU, or may be the same as the form (for example, the foregoing example 1A to example 1C) of the SN information in the MAC CE.

**Table 1**

| Bits | | | | | | | | Number of octets (number of octets) |
|---|---|---|---|---|---|---|---|---|
| 7 | 6 | 5 | 4 | 3 | 2 | 1 | 0 | |
| PDU Type (PDU type) (=x) | | | | Spare (Spare) | | | | 1 |
| Maximum PDCP SN/PDCP count of discarded PDCP PDUs (max PDCP SN/PDCP COUNT of the discarded PDCP PDUs) | | | | | | | | 3 or 4 |

As shown in Table 1, the value x of the PDU type field indicates that the frame is a UL discard status frame. For example, x may be an integer within [3, 15]. For specific descriptions of the maximum PDCP SN/PDCP count value of the discarded PDCP PDUs, refer to the foregoing descriptions (for example, the example 1A). Details are not described herein again. The number of octets shown in Table 1 is merely an example. This is not limited in embodiments of this application. Similarly, the numbers of octets shown in Table 2 to Table 6 are not limited in embodiments of this application, either.

In another example, Table 2 shows a format example of another UL discard status frame according to an embodiment of this application.

**Table 2**

| Bits | | | | | | | | Number of octets (number of octets) |
|---|---|---|---|---|---|---|---|---|
| 7 | 6 | 5 | 4 | 3 | 2 | 1 | 0 | |
| PDU Type (PDU type) (=x) | | | | Spare (Spare) | | | | 1 |
| Number of data blocks with consecutive discarding (number of discard blocks) | | | | | | | | 1 |
| Start PDCP SN/COUNT of a data block with consecutive discarding (Start PDCP SN/COUNT of a discarded block) | | | | | | | | 3 or 4 |
| Number of PDCP PDUs in the data block with consecutive discarding (Number of consecutive discarded PDCP PDUs in the discarded block) | | | | | | | | |
| ... | | | | | | | | |

As shown in Table 2, the value x of the PDU type field indicates that the frame is a UL discard status frame. For related descriptions of Table 2, refer to the foregoing descriptions (for example, the example 1B). Table 2 merely shows an example of one "start RLC SN of consecutive discarded data units + number of consecutive discarded data units", and the number of "start RLC SN of consecutive discarded data units + number of consecutive discarded data units" is equal to the number of data blocks with consecutive discarding. The data block shown in Table 2 may include one or more consecutive data packets (or data units). Table 2 and Table 5 are shown by using a data block as an example. In another example, Table 2 and Table 5 may alternatively be represented by using a data unit, and details are not described.

In still another example, Table 3 shows a format example of still another UL discard status frame according to an embodiment of this application.

**Table 3**

| Bits | | | | | | | | Number of octets (number of octets) |
|---|---|---|---|---|---|---|---|---|
| 7 | 6 | 5 | 4 | 3 | 2 | 1 | 0 | |
| PDU Type (PDU type) (=x) | | | | Spare (Spare) | | | | 1 |
| PDCP SN/count value of the first discarded data unit (start PDCP SN/COUNT) | | | | | | | | 3 or 4 |
| Bitmap length (length bitmap) | | | | | | | | 1 |
| Bitmap (bitmap) | | | | | | | | Bitmap length |

As shown in Table 3, the value x of the PDU type field indicates that the frame is a UL discard status frame. For specific descriptions of Table 3, refer to the foregoing descriptions (for example, the example 1C).

Alternatively, a conventional assistance information data (assistance information data) frame may be reused for the UL discard status frame. Table 4 to Table 6 show frame formats obtained through extension based on the assistance information data frame.

In an example, Table 4 shows an example of an extended format of an assistance information data frame according to an embodiment of this application.

**Table 4**

| Bits | | | | | | | | Number of octets (number of octets) |
|---|---|---|---|---|---|---|---|---|
| 7 | 6 | 5 | 4 | 3 | 2 | 1 | 0 | |
| PDU Type (PDU | | | | PDCP duplication | Assistance information | Uplink delay (UL delay) | Downlink delay | 1 |
| type) (=x) | | | | (pupl.) Ind. | ind. | indication (indication, ind.) | (DL delay) ind. | |
| Spare (spare) | | | | | | **Uplink discard status (UL discard status) ind.** | PDCP duplication activation suggestion (PDCP Duplication Activation Suggestion) | 1 |
| Number of assistance information fields (number of assistance information fields) | | | | | | | | 0 or 1 |
| Assistance information type (assistance information type) | | | | | | | | 0 or (2 * number of assistance information fields + sum of number of octets for radio quality assistance information fields) |
| Number of octets for radio quality assistance information fields (number of octets for radio quality assistance information fields) | | | | | | | | |
| Radio quality assistance information (radio quality assistance information) | | | | | | | | |
| Uplink delay DU result (UL delay DU result) | | | | | | | | 0 or 4 |
| Downlink delay DU result (DL delay DU result) | | | | | | | | 0 or 4 |
| **Maximum PDCP SN/PDCP count of discarded PDCP PDUs (max PDCP SN/PDCP COUNT of the discarded PDCP PDUs)** | | | | | | | | 3 or 4 |

Bold parts in Table 4 may be content related to the PDCP SN information. For specific descriptions of the parts, refer to the foregoing descriptions. Details are not described herein again. For descriptions of a non-bold part in Table 4, refer to a related standard. This is not limited in embodiments of this application.

In another example, Table 5 shows an example of an extended format of an assistance information data frame according to an embodiment of this application.

**Table 5**

| Bits | | | | | | | | Number of octets (number of octets) |
|---|---|---|---|---|---|---|---|---|
| 7 | 6 | 5 | 4 | 3 | 2 | 1 | 0 | |
| PDU Type (PDU type) (=x) | | | | PDCP duplication (pupl.) Ind. | Assistance information ind. | Uplink delay (UL delay) ind. | Downlink delay (DL delay) ind. | 1 |
| Spare (spare) | | | | | | **Uplink discard status (UL discard status) ind.** | PDCP duplication activation suggestion (PDCP Duplication Activation Suggestion) | 1 |
| Number of assistance information fields (number of assistance information fields) | | | | | | | | 0 or 1 |
| Assistance information type (assistance information type) | | | | | | | | 0 or (2 * number of assistance information fields + sum of number of octets for radio quality assistance information fields) |
| Number of octets for radio quality assistance information fields (number of octets for radio quality assistance information fields) | | | | | | | | |
| Radio quality assistance information (radio quality assistance information) | | | | | | | | |
| Uplink delay DU result (UL delay DU result) | | | | | | | | 0 or 4 |
| Downlink delay DU result (DL delay DU result) | | | | | | | | 0 or 4 |
| **Number of data blocks with consecutive discarding (number of discard blocks)** | | | | | | | | 1 |
| **Start PDCP SN/COUNT of a data block with consecutive discarding (Start PDCP SN/COUNT of a discarded block)** | | | | | | | | 3 or 4 |
| **Number of PDCP PDUs in the data block with consecutive discarding (Number of consecutive discarded PDCP PDUs in the discarded block)** | | | | | | | | 1 |

Bold parts in Table 5 may be content related to the PDCP SN information. For specific descriptions of the parts, refer to the foregoing descriptions. Details are not described herein again. For descriptions of a non-bold part in Table 5, refer to a related standard. This is not limited in embodiments of this application.

In still another example, Table 6 shows an example of an extended format of an assistance information data frame according to an embodiment of this application.

**Table 6**

| Bits | | | | | | | | Number of octets (number of octets) |
|---|---|---|---|---|---|---|---|---|
| 7 | 6 | 5 | 4 | 3 | 2 | 1 | 0 | |
| PDU Type (PDU type) (=x) | | | | PDCP duplication (pupl.) Ind. | Assistance information ind. | Uplink delay (UL delay) ind. | Downlink delay (DL delay) ind. | 1 |
| Spare (spare) | | | | | | **Uplink discard status (UL discard status) ind.** | PDCP duplication activation suggestion (PDCP Duplication Activation Suggestion) | 1 |
| Number of assistance information fields (number of assistance information fields) | | | | | | | | 0 or 1 |
| Assistance information type (assistance information type) | | | | | | | | 0 or (2 * number of assistance information fields + sum of number of octets for radio quality assistance information fields) |
| Number of octets for radio quality assistance information fields (number of octets for radio quality assistance information fields) | | | | | | | | |
| Radio quality assistance information (radio quality assistance information) | | | | | | | | |
| Uplink delay DU result (UL delay DU result) | | | | | | | | 0 or 4 |
| Downlink delay DU result (DL delay DU result) | | | | | | | | 0 or 4 |
| **PDCP SN/count value of the first discarded data unit (start PDCP SN/COUNT)** | | | | | | | | 1 |
| **Bitmap length (length bitmap)** | | | | | | | | 3 or 4 |
| **Bitmap (bitmap)** | | | | | | | | Bitmap length |

Bold parts in Table 6 may be content related to the PDCP SN information. For specific descriptions of the parts, refer to the foregoing descriptions. Details are not described herein again. For descriptions of a non-bold part in Table 6, refer to a related standard. This is not limited in embodiments of this application.

In this embodiment of this application, F1-U interface signaling between a DU and a CU is extended, so that when a receiving end is a network device, the data processing method provided in embodiments of this application may be applied to a CU-DU split network architecture. Certainly, the data processing method provided in embodiments of this application may also be applied to an ORAN network architecture. Architectures are not enumerated herein.

In some other embodiments of this application, a data processing method and an apparatus are further provided, to effectively improve ARQ retransmission and improve reliability of transmission within a PDB/PSDB. For example, a transmitting end may quickly trigger ARQ retransmission by using L1/L2 signaling.

FIG. 9a is a schematic flowchart of a data processing method according to an embodiment of this application. As shown in FIG. 9a, the method includes the following steps.

901. A network device sends indication information by using L1 signaling or L2 signaling when a TB of a HARQ process A is unsuccessfully decoded. Correspondingly, a terminal device receives the indication information by using the L1 signaling or the L2 signaling. The indication information indicates, to the terminal device, that the TB is unsuccessfully decoded, or the TB still fails to be decoded during the last scheduling.

The unsuccessfully decoded may be replaced with unsuccessfully received, failing to be transmitted, failing to be decoded, or the like.

For example, for uplink transmission, in a cell, after a base station schedules transmission of a TB of a HARQ process A, the base station unsuccessfully decodes the TB, and determines not to continue to schedule retransmission of the HARQ process A subsequently. In this case, the base station may indicate, to UE by using L1 signaling or L2 signaling, that the TB fails to be transmitted. The HARQ process A shown in this embodiment of this application is merely an example, and A shown herein may be used to represent an identifier of a process.

Implementations of the L1 signaling include:
(a) The indication information is carried in new transmission scheduling DCI for scheduling the HARQ process A subsequently, to indicate, to the UE, that the previous TB transmission of the HARQ process A ends with unsuccessful decoding.
(b) The indication information is carried in scheduling DCI of another HARQ process (for example, a HARQ process B) in a same cell, to indicate, to the UE, that the previous TB transmission of the HARQ process A ends with unsuccessful decoding. In this manner, the indication information may include a process number of the HARQ process A.
(c) The indication information is carried in DCI for scheduling a HARQ process of another cell, to indicate, to the UE, that the previous TB transmission of the HARQ process A ends with unsuccessful decoding. In this manner, the indication information may include a cell identifier associated with the HARQ process A and a process number of the HARQ process A.

The L2 signaling may be a MAC CE. In the MAC CE, the base station may indicate, to the UE, that a previous TB transmission of at least one HARQ process (one or more HARQ processes) ends with unsuccessful decoding. All TBs of the at least one HARQ process fail to be decoded. For example, the MAC CE may carry a cell identifier and an identifier (for example, a process number) of the HARQ process A. Alternatively, the MAC CE may carry a cell identifier and a bitmap, and each bit in the bitmap may correspond to indication information indicating whether a previous transmission of a HARQ process in a cell ends with successful decoding. Optionally, the MAC CE may not carry a cell identifier, and the UE determines, based on a cell in which the MAC CE is received, that the MAC CE indicates information about whether an uplink transmission of the corresponding cell ends with successful decoding.

902. When the indication information is carried in the L1 signaling, the terminal device may deliver, to a MAC layer, the indication information carried in the L1 signaling.

When the indication information is carried in the L2 signaling, the terminal device may receive the L2 signaling by using the MAC layer.

903. The terminal device indicates, to an RLC layer corresponding to an LCH X, that the TB fails to be transmitted.

If the MAC layer of the terminal device determines that the previous TB transmission of the HARQ process A fails, and determines that the TB includes a data unit of a specified logical channel (logical channel, LCH) X, the terminal device indicates, to an RLC layer corresponding to the LCH X, that the previous data transmission fails.

X is an identifier of a logical channel.

904. The RLC layer of the terminal device triggers ARQ retransmission for an RLC SDU/SDU segment transmitted at a previous transmission opportunity.

That is, the RLC entity of the UE may consider that NACK feedback of the network device is received for all RLC SDU/SDU segments delivered by the RLC layer to the MAC layer at the previous transmission opportunity.

In this embodiment of this application, a condition for triggering ARQ retransmission may be that the terminal device receives NACK feedback (that is, the indication information) that is carried in the L1 signaling or the L2 signaling and that indicates that a TB fails to be decoded. ARQ retransmission can be quickly triggered by using the L1 signaling or the L2 signaling.

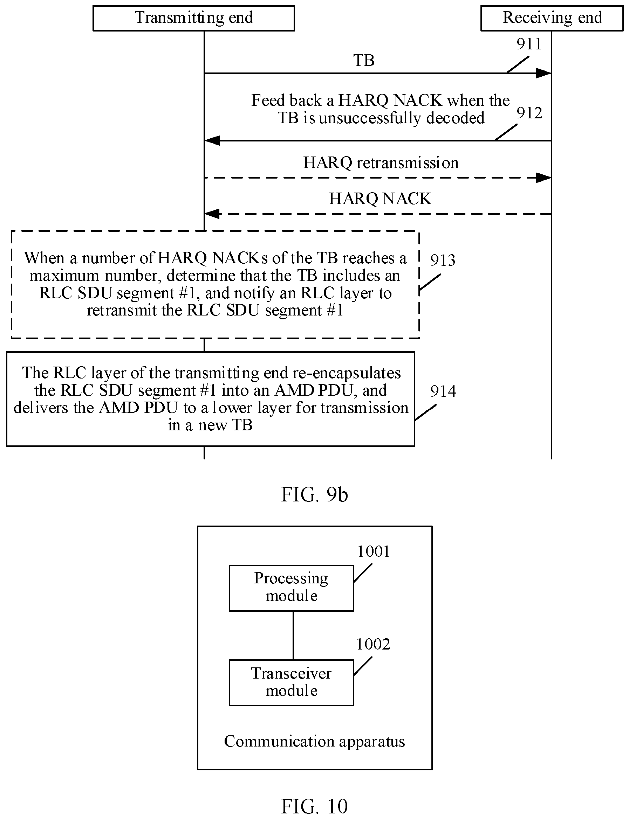

FIG. 9b is a schematic flowchart of another data processing method according to an embodiment of this application. For descriptions of a transmitting end and a receiving end, refer to the foregoing descriptions of the communication system. In an example, the transmitting end may include a network device or a chip, a functional module, or the like disposed in the network device, and the receiving end may include a terminal device or a chip, a functional module, or the like disposed in the terminal device. In another example, the transmitting end may include a terminal device or a chip, a functional module, or the like disposed in the terminal device, and the receiving end may include a network device or a chip, a functional module, or the like disposed in the network device. Examples are not enumerated herein. As shown in FIG. 9b, the method includes the following steps.

911. The transmitting end sends a TB to the receiving end. Correspondingly, the receiving end receives the TB.

For example, for downlink transmission, an LCH X may be used to transmit a service that has high latency and reliability requirements, such as an XR service. For example, a TB in downlink transmission may include an RLC SDU segment (segment) #1 from the LCH X. A base station may transmit the TB through an air interface.

912. The receiving end feeds back a HARQ NACK when the TB is unsuccessfully decoded.

After receiving the HARQ NACK, the transmitting end may retransmit the TB several times. For example, the transmitting end performs HARQ retransmission several times, but the receiving end still unsuccessfully decodes the TB and feeds back HARQ NACKs.

913. When the number of HARQ NACKs of the TB reaches a maximum number, the transmitting end determines that the TB includes an RLC SDU segment (segment) #1, and notifies an RLC layer to retransmit the RLC SDU segment (segment) #1.

For example, the transmitting end may determine that the TB includes the RLC SDU segment (segment) #1, and notify the transmitting RLC layer that the RLC SDU segment (segment) #1 fails to be transmitted. The transmitting RLC layer may send polling (polling) information to a receiving RLC layer, to request the receiving RLC layer to feed back an RLC status report. The transmitting RLC layer may retransmit an unsuccessfully transmitted data packet based on the RLC status report. The RLC SDU segment (segment) #1 is merely an example, and this embodiment of this application is also applicable to other RLC SDUs or segments.

914. The RLC layer of the transmitting end re-encapsulates the RLC SDU segment (segment) #1 into an acknowledged mode data (AM data, AMD) PDU, and delivers the AMD PDU to a lower layer for transmission on a new TB.

For example, the foregoing step 913 and step 914 may be replaced as follows: When the number of HARQ NACKs of the TB reaches a maximum number, the transmitting end may retransmit the TB, or the transmitting end may retransmit an RLC SDU segment or an RLC SDU of the TB by using the transmitting RLC layer.

Generally, after receiving the RLC status report fed back by the receiving RLC layer, the transmitting RLC layer needs to retransmit a data packet of a corresponding RLC SN based on NACK SN information indicated in the RLC status report. The receiving RLC layer triggers the RLC status report when an RLC status report trigger condition is met. For example, the trigger condition may include: (1) A polling (polling) indication of the transmitting end is received. (2) A t-Reassembly timer started when a hole occurs in a receiving end window expires. When the RLC status report is triggered, the receiving RLC layer is allowed to generate an RLC status PDU and send the RLC status PDU when a t-StatusProhibit timer is not running.

However, for the XR service, a PDB/PSDB is usually small (for example, 15 ms). When AM RLC is used, the RLC status report is triggered and sent slowly, making it difficult to trigger retransmission as soon as possible within PDB duration to improve service transmission reliability. According to the method shown in FIG. 9a in embodiments of this application, ARQ retransmission is triggered by using a NACK that is carried in L1 signaling or L2 signaling and that indicates that a TB fails to be decoded, or ARQ retransmission is triggered when the number of HARQ NACKs for a TB reaches a maximum number. In this way, ARQ retransmission is quickly triggered, and reliability of data transmission within a PDB/PSDB is improved. The trigger condition shown in embodiments of this application may include (1) and (2) shown above, and may further include the L1 signaling or the L2 signaling shown in FIG. 9a, and the number of HARQ NACKs shown in FIG. 9b.

In the foregoing embodiments of this application, for a part that is not described in detail in an embodiment, refer to another embodiment.

The following describes the communication apparatus provided in embodiments of this application.

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that the module division in this application is an example, which is merely logical function division. In actual implementation, another division manner may be used. The following describes in detail the communication apparatus in embodiments of this application with reference to FIG. 10 to FIG. 12.

FIG. 10 is a diagram of a structure of a communication apparatus according to an embodiment of this application. As shown in FIG. 10, the communication apparatus includes a processing module 1001 and a transceiver module 1002. The transceiver module 1002 may implement a corresponding communication function, and the processing module 1001 is configured to perform data processing. For example, the transceiver module 1002 may also be referred to as an interface, a communication interface, a communication module, or the like.

In some embodiments of this application, the communication apparatus may be configured to perform an action performed by the transmitting end in the foregoing method embodiments. For example, the transmitting end may be a device or a chip, a functional module, or the like that can be configured in the device. The transceiver module 1002 is configured to perform a receiving/sending-related operation of the transmitting end in the foregoing method embodiments. The processing module 1001 is configured to perform a processing-related operation of the transmitting end in the foregoing method embodiments.

For example, the processing module 1001 is configured to obtain SN information of a data unit discarded by a first protocol layer of the transmitting end.

The transceiver module 1002 is configured to send or output the SN information by using control signaling of a second protocol layer of the transmitting end.

For example, the transceiver module 1002 is specifically configured to send or output the SN information of the first protocol layer of the transmitting end and SN information of the second protocol layer of the transmitting end by using the control signaling of the second protocol layer of the transmitting end.

For example, the transceiver module 1002 is further configured to receive or input a first RLC status report. The processing module 1001 is specifically configured to determine the SN information based on an SN of a successfully received data unit indicated by the first RLC status report and the data unit discarded by the first protocol layer of the transmitting end.

For example, the transceiver module 1002 is further configured to: receive or input a second RLC status report; and when an unsuccessfully received data unit indicated by the second RLC status report includes a data unit indicated by the SN information, send or output the SN information by using the control signaling of the second protocol layer of the transmitting end.

For example, the transceiver module 1002 is further configured to receive or input a third RLC status report.

With reference to FIG. 10 again, in some other embodiments of this application, the communication apparatus may be configured to perform an action performed by the receiving end in the foregoing method embodiments. For example, the receiving end may be a device or a chip, a functional module, or the like that can be configured in the device. The transceiver module 1002 is configured to perform a receiving/sending-related operation of the receiving end in the foregoing method embodiments. The processing module 1001 is configured to perform a processing-related operation of the receiving end in the foregoing method embodiments.

For example, the transceiver module 1002 is configured to receive or input control signaling from a second protocol layer of a transmitting end.

The processing module 1001 is configured to obtain SN information of a data unit discarded by a first protocol layer of the transmitting end.

The processing module 1001 is further configured to output the SN information to a first protocol layer of the receiving end by a second protocol layer of the receiving end.

For example, the processing module 1001 may be configured to process the SN information. For example, a variable maintained by a PDCP layer of the receiving end is updated based on SN information of a PDCP layer of the transmitting end. For another example, a variable maintained by an RLC layer of the receiving end is updated based on SN information of an RLC layer of the transmitting end.

For example, the transceiver module 1002 is specifically configured to receive or input the control signaling from the second protocol layer of the transmitting end.

The processing module 1001 is specifically configured to obtain the SN information of the PDCP layer of the transmitting end and the SN information of the RLC layer of the transmitting end.

For example, the transceiver module 1002 is further configured to send or output a third RLC status report.

For example, the transceiver module 1002 is further configured to send or output a second RLC status report.

With reference to FIG. 10 again, in some embodiments of this application, the communication apparatus may be configured to perform an action performed by the terminal device in the foregoing method embodiments. For example, the communication apparatus may be the terminal device or a chip, a functional module, or the like that can be configured in the terminal device. The transceiver module 1002 is configured to perform a receiving/sending-related operation of the terminal device in the foregoing method embodiments. The processing module 1001 is configured to perform a processing-related operation of the terminal device in the foregoing method embodiments.

For example, the transceiver module 1002 is configured to receive or input indication information, and the processing module 1001 is configured to trigger ARQ retransmission of an SDU based on the indication information.

For example, the transceiver module 1002 is configured to: send a HARQ NACK when the terminal device unsuccessfully decodes a TB; and trigger ARQ retransmission of an SDU when the number of HARQ NACKs of the TB reaches a maximum number.

With reference to FIG. 10 again, in some other embodiments of this application, the communication apparatus may be configured to perform an action performed by the network device in the foregoing method embodiments. For example, the communication apparatus may be the network device or a chip, a functional module, or the like that can be configured in the network device. The transceiver module 1002 is configured to perform a receiving/sending-related operation of the network device in the foregoing method embodiments. The processing module 1001 is configured to perform a processing-related operation of the network device in the foregoing method embodiments.

For example, the transceiver module 1002 is configured to send indication information when a TB of a process is unsuccessfully decoded.

For example, the transceiver module 1002 is configured to: send a HARQ NACK when the network device unsuccessfully decodes a TB; and trigger ARQ retransmission of an SDU when the number of HARQ NACKs of the TB reaches a maximum number.

Optionally, in the foregoing embodiments, the communication apparatus may further include a storage module. The storage module may be configured to store instructions and/or data. The processing module 1001 may read the instructions and/or the data in the storage module, to enable the communication apparatus to implement the foregoing method embodiments.

In the foregoing embodiments, for specific descriptions of terms such as the SN information, the SN information of the PDCP layer of the transmitting end, the SN information of the RLC layer of the transmitting end, the first RLC status report, the second RLC status report, the third RLC status report, the indication information, and the HARQ NACK or steps, refer to descriptions in the foregoing method embodiments. Details are not described herein again.

Specific descriptions of the transceiver module and the processing module shown in the foregoing embodiments are merely examples. For specific functions or steps performed by the transceiver module and the processing module, refer to the foregoing method embodiments. Details are not described herein again.

The foregoing describes the communication apparatus in embodiments of this application. The following describes possible product forms of the communication apparatus. Any form of product that has a function of the communication apparatus shown in FIG. 10 falls within the protection scope of embodiments of this application. The following descriptions are merely examples, and a product form of the communication apparatus in embodiments of this application is not limited thereto.

In a possible implementation, in the communication apparatus shown in FIG. 10, the processing module 1001 may be one or more processors, and the transceiver module 1002 may be a transceiver. Alternatively, the transceiver module 1002 may be a sending module and a receiving module, the sending module may be a transmitter, the receiving module may be a receiver, and the sending module and the receiving module are integrated into one component, for example, a transceiver. In embodiments of this application, the processor and the transceiver may be coupled or the like. A manner of connection between the processor and the transceiver is not limited in embodiments of this application. In a process of performing the foregoing method, a process of sending information in the foregoing method may be a process of outputting the information by the processor. When outputting the information, the processor outputs the information to the transceiver, so that the transceiver transmits the information. After the information is output by the processor, other processing may further need to be performed on the information, and then processed information arrives at the transceiver. Similarly, a process of receiving information in the foregoing method may be a process of receiving the input information by the processor. When the processor receives the input information, the transceiver receives the information, and inputs the information into the processor. Further, after the transceiver receives the information, other processing may need to be performed on the information, and then processed information is input into the processor.

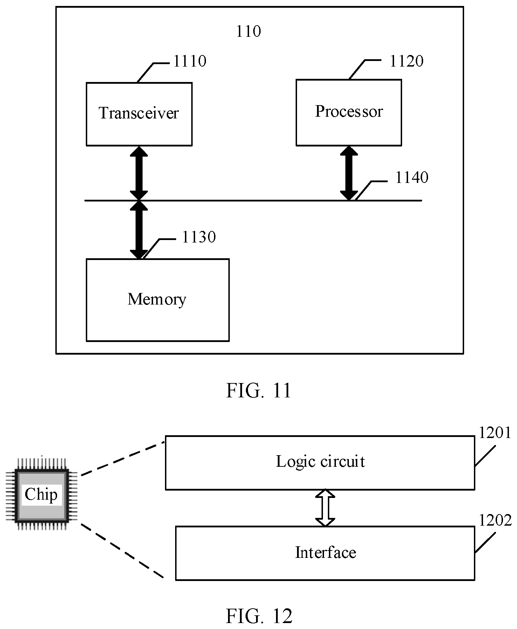

As shown in FIG. 11, a communication apparatus 110 includes one or more processors 1120 and a transceiver 1110. For example, the transceiver 1110 is configured to perform a function or a step implemented by the transceiver module 1002 shown in FIG. 10, and the processor 1120 is configured to perform a function or a step implemented by the processing module 1001 shown in FIG. 10. For specific descriptions of the processor 1120 and the transceiver 1110, refer to FIG. 10 or the foregoing method embodiments. Details are not described herein again.

In the foregoing embodiments, for specific descriptions of terms such as the SN information, the SN information of the PDCP layer of the transmitting end, the SN information of the RLC layer of the transmitting end, the first RLC status report, the second RLC status report, the third RLC status report, the indication information, and the HARQ NACK or steps, refer to descriptions in the foregoing method embodiments. Details are not described herein again.

In implementations of the communication apparatus shown in FIG. 11, the transceiver may include a receiver and a transmitter. The receiver is configured to perform a receiving function (or operation), the transmitter is configured to perform a transmitting function (or operation), and the transceiver is configured to communicate with another device/apparatus through a transmission medium.

Optionally, the communication apparatus 110 may further include one or more memories 1130, configured to store program instructions and/or data. The memory 1130 is coupled to the processor 1120. The coupling in embodiments of this application may be an indirect coupling or a communication connection between apparatuses, units, or modules in electrical, mechanical, or other forms, and is used for information exchange between the apparatuses, the units, or the modules. The processor 1120 may operate with the memory 1130. The processor 1120 may execute the program instructions stored in the memory 1130. Optionally, at least one of the one or more memories may be included in the processor.

A specific connection medium between the transceiver 1110, the processor 1120, and the memory 1130 is not limited in embodiments of this application. In embodiments of this application, the memory 1130, the processor 1120, and the transceiver 1110 are connected by a bus 1140 in FIG. 11, and the bus is represented by a bold line in FIG. 11, which is merely an example for description, and a manner of connection between other components is not limited thereto. The bus may be classified into an address bus, a data bus, a control bus, or the like. For ease of representation, only one bold line is used to represent the bus in FIG. 11, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like, and can implement or execute the methods, the steps, and the logical block diagrams disclosed in embodiments of this application. The general-purpose processor may be a microprocessor or any conventional processor or the like. The steps of the method disclosed with reference to embodiments of this application may be directly completed by a hardware processor, or may be completed by using a combination of hardware in the processor and a software module, or the like.

In embodiments of this application, the memory may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory is but not limited to any storage medium that can be used to carry or store program code in an instruction or data structure form and that can be read and/or written by a computer (for example, the communication apparatus shown in this application). The memory in embodiments of this application may alternatively be a circuit or any other apparatus that can implement a storage function, and is configured to store program instructions and/or data.

The processor 1120 is mainly configured to: process a communication protocol and communication data, control the entire communication apparatus, execute a software program, and process data of the software program. The memory 1130 is mainly configured to store the software program and the data. The transceiver 1110 may include a control circuit and an antenna. The control circuit is mainly configured to perform conversion between a baseband signal and a radio frequency signal and process the radio frequency signal. The antenna is mainly configured to receive and send radio frequency signals in an electromagnetic wave form. An input/output apparatus, for example, a touchscreen, a display screen, or a keyboard, is mainly configured to receive data input by a user and output data to the user.

After the communication apparatus is powered on, the processor 1120 may read the software program in the memory 1130, interpret and execute instructions of the software program, and process the data of the software program. When data needs to be sent wirelessly, the processor 1120 performs baseband processing on the to-be-sent data, and then outputs a baseband signal to a radio frequency circuit. The radio frequency circuit performs radio frequency processing on the baseband signal, and then sends a radio frequency signal in the electromagnetic wave form by using the antenna. When data is sent to the communication apparatus, the radio frequency circuit receives a radio frequency signal by using the antenna, converts the radio frequency signal into a baseband signal, and outputs the baseband signal to the processor 1120. The processor 1120 converts the baseband signal into data and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

The communication apparatus shown in embodiments of this application may alternatively have more components than those in FIG. 11, or the like. This is not limited in embodiments of this application. The method performed by the processor and the transceiver is merely an example. For specific steps performed by the processor and the transceiver, refer to the method described above.

In another possible implementation, in the communication apparatus shown in FIG. 10, the processing module 1001 may be one or more logic circuits, and the transceiver module 1002 may be an input/output interface, or referred to as a communication interface, an interface circuit, an interface, or the like. Alternatively, the transceiver module 1002 may be a sending module and a receiving module. The sending module may be an output interface, the receiving module may be an input interface, and the sending module and the receiving module are integrated into one module, for example, an input/output interface. As shown in FIG. 12, a communication apparatus shown in FIG. 12 includes a logic circuit 1201 and an interface 1202. That is, the processing module 1001 may be implemented by using the logic circuit 1201, and the transceiver module 1002 may be implemented by using the interface 1202. The logic circuit 1201 may be a chip, a processing circuit, an integrated circuit, a system on chip (system on chip, SoC), or the like. The interface 1202 may be a communication interface, an input/output interface, a pin, or the like. For example, FIG. 12 shows an example in which the communication apparatus is a chip. The chip includes the logic circuit 1201 and the interface 1202.

In embodiments of this application, the logic circuit and the interface may be coupled to each other. A specific manner of connection between the logic circuit and the interface is not limited in embodiments of this application. For example, the logic circuit 1201 may be configured to perform a function or a step implemented by the processing module 1001 shown in FIG. 10, and the interface 1202 may be configured to perform a function or a step implemented by the transceiver module 1002 shown in FIG. 10. For specific descriptions of the logic circuit 1201 and the interface 1202, refer to FIG. 10 or the foregoing method embodiments. Details are not described herein again.

The foregoing descriptions of the communication apparatus are merely examples. For specific descriptions of the communication apparatus shown in FIG. 12, further refer to the foregoing method embodiments, FIG. 10, or FIG. 11. Details are not described herein again.

The communication apparatus shown in embodiments of this application may implement the method according to embodiments of this application in a form of hardware or software. This is not limited in embodiments of this application.

In the foregoing embodiments, for specific descriptions of terms such as the SN information, the SN information of the PDCP layer of the transmitting end, the SN information of the RLC layer of the transmitting end, the first RLC status report, the second RLC status report, the third RLC status report, the indication information, and the HARQ NACK or steps, refer to descriptions in the foregoing method embodiments. Details are not described herein again. For specific implementations of embodiments shown in FIG. 12, refer to the foregoing embodiments. Details are not described herein again.

An embodiment of this application further provides a communication system. The communication system includes a transmitting end and a receiving end. The transmitting end and the receiving end may be configured to perform the method in any one of the foregoing embodiments.

An embodiment of this application further provides a communication system. The communication system includes a terminal device and a network device. The terminal device and the network device may be configured to perform the method in any one of the foregoing embodiments.

In addition, this application further provides a computer program. The computer program is configured to implement operations and/or processing performed by communication apparatuses in the method provided in this application.

This application further provides a computer-readable storage medium. The computer-readable storage medium stores computer code. When the computer code is run on a computer, the computer is enabled to perform operations and/or processing performed by communication apparatuses in the method provided in this application.

This application further provides a computer program product. The computer program product includes computer code or a computer program. When the computer code or the computer program is run on a computer, operations and/or processing performed by communication apparatuses in the method provided in this application are/is performed.

In the several embodiments provided in this application, it should be understood that the disclosed system, apparatus, and method may be implemented in other manners. For example, the apparatus embodiments described above are merely examples. For example, the module division is merely logical function division. In actual implementation, another division manner may be used. For example, a plurality of modules or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The modules described as separate parts may or may not be physically separate, and parts displayed as modules may or may not be physical modules, which may be located in one place, or may be distributed on a plurality of network modules. Some or all of the modules may be selected based on an actual requirement to achieve the technical effects of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of the software functional module and sold or used as an independent product, the integrated unit may be stored in a computer-readable storage medium. Based on such an understanding, the technical solutions of this application essentially, or the part contributing to conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the method described in embodiments of this application. The readable storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, wherein the method comprises:
obtaining first sequence number SN information of a data unit discarded by a first protocol layer of a transmitting end; and
sending the first SN information to a second protocol layer of a receiving end by using control signaling of a second protocol layer of the transmitting end.

2. The method according to claim 1, wherein the second protocol layer of the transmitting end is a radio link control RLC layer of the transmitting end, and the first protocol layer of the transmitting end is a packet data convergence protocol PDCP layer of the transmitting end.

3. The method according to claim 2, wherein the control signaling comprises an RLC control protocol data unit PDU.

4. The method according to any one of claims 1 to 3, wherein the sending the first SN information to the second protocol layer of the receiving end by using the control signaling of the second protocol layer of the transmitting end comprises:
sending the first SN information and second SN information to an RLC layer of the receiving end by using the RLC control PDU of the RLC layer of the transmitting end, wherein the second SN information is SN information of the RLC layer of the transmitting end.

5. The method according to any one of claims 1 to 4, wherein the method further comprises:
receiving a first RLC status report; and
the obtaining the first sequence number SN information of the data unit discarded by the first protocol layer of the transmitting end comprises:
determining the first SN information based on an SN of a successfully received data unit indicated by the first RLC status report and the data unit discarded by the first protocol layer of the transmitting end.

6. The method according to any one of claims 1 to 5, wherein after the sending the first SN information to the second protocol layer of the receiving end by using the control signaling of the second protocol layer of the transmitting end, the method further comprises:
receiving a second RLC status report; and
when an unsuccessfully received data unit indicated by the second RLC status report comprises a data unit indicated by the first SN information, retransmitting the first SN information to the second protocol layer of the receiving end by using the control signaling of the second protocol layer of the transmitting end.

7. The method according to any one of claims 1 to 5, wherein after the sending the first SN information to the second protocol layer of the receiving end by using the control signaling of the second protocol layer of the transmitting end, the method further comprises:
receiving a third RLC status report, wherein the third RLC status report indicates that one or more data units in a data unit indicated by the first SN information are successfully received.

8. The method according to claim 1, wherein the second protocol layer of the transmitting end is a medium access control MAC layer of the transmitting end, and the first protocol layer of the transmitting end is an RLC layer of the transmitting end.

9. The method according to claim 8, wherein the control signaling comprises a MAC control element CE.

10. A data processing method, wherein the method comprises:
obtaining, by a second protocol layer of a receiving end by using control signaling from a second protocol layer of a transmitting end, first sequence number SN information of a data unit discarded by a first protocol layer of the transmitting end; and
sending, by the second protocol layer of the receiving end, the first SN information to a first protocol layer of the receiving end.

11. The method according to claim 10, wherein the second protocol layer of the receiving end is a radio link control RLC layer of the receiving end, and the first protocol layer of the receiving end is a packet data convergence protocol PDCP layer of the receiving end.

12. The method according to claim 11, wherein the control signaling comprises an RLC control protocol data unit PDU.

13. The method according to any one of claims 10 to 12, wherein the obtaining, by the second protocol layer of the receiving end by using the control signaling from the second protocol layer of the transmitting end, the first sequence number SN information of the data unit discarded by the first protocol layer of the transmitting end comprises:
obtaining, by the second protocol layer of the receiving end, the first SN information and second SN information by using the control signaling from the second protocol layer of the transmitting end, wherein the second SN information is SN information of an RLC layer of the transmitting end, and the first SN information is SN information of a PDCP layer of the transmitting end.

14. The method according to claim 13, wherein the method further comprises:
updating, based on the SN information of the PDCP layer of the transmitting end, a variable maintained by the PDCP layer of the receiving end; and
updating, based on the SN information of the RLC layer of the transmitting end, a variable maintained by the RLC layer of the receiving end.

15. The method according to any one of claims 10 to 14, wherein the method further comprises:
sending a third RLC status report, wherein the third RLC status report indicates that one or more data units in a data unit indicated by the first SN information are successfully received.

16. The method according to any one of claims 10 to 14, wherein the method further comprises:
sending a second RLC status report, wherein an unsuccessfully received data unit indicated by the second RLC status report comprises a data unit indicated by the first SN information; and
obtaining, by the second protocol layer of the receiving end, the retransmitted first SN information by using the control signaling from the second protocol layer of the transmitting end.

17. The method according to claim 10, wherein the second protocol layer of the receiving end is a medium access control MAC layer of the receiving end, and the first protocol layer of the receiving end is an RLC layer of the receiving end.

18. The method according to claim 16, wherein the control signaling comprises a MAC control element CE.

19. A communication apparatus, comprising a module configured to perform the method according to any one of claims 1 to 9.

20. A communication apparatus, comprising a module configured to perform the method according to any one of claims 10 to 11.

21. A communication apparatus, comprising a processor, wherein the processor is configured to perform the method according to any one of claims 1 to 9.

22. A communication apparatus, comprising a processor, wherein the processor is configured to perform the method according to any one of claims 10 to 18.

23. A communication apparatus, comprising a logic circuit and an interface, wherein the logic circuit is coupled to the interface; and
the interface is configured to input and/or output information, and the logic circuit is configured to perform the method according to any one of claims 1 to 9.

24. A communication apparatus, comprising a logic circuit and an interface, wherein the logic circuit is coupled to the interface; and
the interface is configured to input and/or output information, and the logic circuit is configured to perform the method according to any one of claims 10 to 18.

25. A computer-readable storage medium, wherein the computer-readable storage medium is configured to store a computer program, and when the computer program is executed, the method according to any one of claims 1 to 18 is performed.

26. A communication system, comprising a transmitting end and a receiving end, wherein the transmitting end is configured to perform the method according to any one of claims 1 to 9, and the receiving end is configured to perform the method according to any one of claims 10 to 18.
